# EUROPEAN PATENT APPLICATION

(11) **EP 2 635 033 A1**
(43) Date of publication of application: **04.09.2013**
(21) Application number: 11836297.9
(22) Date of filing: 25.10.2011
(51) Int. Cl.: H04N 13/00, H04N 7/26

(54) **ENCODING METHOD, DISPLAY DEVICE, DECODING METHOD**

(30) Priority: 25.10.2010 US 406347 P
(71) Applicant: Panasonic Corporation, Osaka 571-8501 (JP)
(72) Inventor: SASAKI, Taiji, Osaka 540-6207 (JP); NISHI, Takahiro, Osaka 540-6207 (JP); KAWAGUCHI, Toru, Osaka 540-6207 (JP)
(74) Representative: Grünecker, Kinkeldey, Stockmair & Schwanhäusser
(86) International application number: PCT/JP2011/074586
(87) International publication number: WO 2012/057164

(57) **Abstract**

An encoding method is provided, according to which video streams obtained by compression-coding original images are contained in one transport stream. The video streams contained in the transport stream include a video stream that constitutes 2D video and video streams that constitute 3D video. When containing such video streams in the transport stream, a descriptor specifying the video streams constituting the 3D video is contained in a PMT (Programmable Map Table) of the transport stream.

## Description

### [Technical Field]

The present invention relates to an encoding method, more particularly to an encoding method applied to transport streams for 3D video.

### [Background Art]

At present, 3D programs are broadcasted by broadcast stations supplying ITS (a single transport stream) to television display devices located in each household. More specifically, the ITS here is obtained by multiplexing video streams by applying the Side-by-Side format for enabling 3D playback. When applying the Side-by-Side format, left-view video for stereoscopic viewing and right-view video for stereoscopic viewing are aligned side-by-side, and are packaged within an area corresponding to one frame. Thus, 3D playback is realized (refer to Patent Literature 1).

Accordingly, when receiving a video stream, a conventional display device first judges whether or not the video stream input thereto is that for 3D video. When judging that the video stream is that for 3D video, a conventional display device performs decoding of right-view images and left-view images by automatically presuming that picture data included in each of the frames composing the video stream are in the Side-by-Side format. More specifically, a presumption is made that the right half of the picture data stores a right-view image, whereas the left half of the picture data stores a left-view image.

### [Citation List]

### [Patent Literature]

[Patent Literature 1]
Japanese Patent No. 3789794

### [Summary of Invention]

### [Technical Problem]

Since conventional 3D television broadcasting supports the 1TS-1VS format (a format where a single video stream is transmitted using a single transport stream), the switching between 3D mode and 2D mode is not realized. Thus, not enough consideration is made of the convenience on the side of the user, since 3D television broadcast can be viewed only as 3D video.

In contrast, a BD-ROM playback device reads out, from a BD-ROM, each of a transport stream containing a video stream for the right eye and a transport stream containing a video stream for the left eye, and supplies the video streams read out to the decoder. Thus, switching between 2D mode and 3D mode can be performed flexibly. Since a BD-ROM playback device reads out both a transport stream containing a right-view video stream and a transport stream containing a left-view video stream at the same time, the two transport streams (2TS) are converted into interleave format files before being recorded onto the BD-ROM. However, the same technology cannot be applied to TV programs for digital television broadcasting, since in digital television broadcasting, one TV program can be transmitted by using only one transport stream (1TS). Thus, transmission of the right-view video stream and the left-view video stream utilizing two transport streams cannot be realized. In addition, in digital television broadcasting, a TV program is not transmitted in units of files, and thus, a file-based correlation between a transport stream storing the right-view video stream and a transport stream storing the left-view video stream cannot be established. As such, it can be concluded that the file-based correlation between transport streams on a BD-ROM cannot be applied as-is to digital television broadcasting.

Hence, one aim of the present invention is to provide an encoding method realizing flexible switching between the 2D and 3D modes even in an environment where only one transport stream (1TS) can be used for the transmission of one TV program.

### [Solution to the Problems]

In view of the above-described presented problems and so as to achieve the above-presented aim, the present invention provides an encoding method comprising: an encoding step of compression-coding images and thereby generating a plurality of video streams; a multiplexing step of multiplexing the plurality of video streams and thereby obtaining a transport stream, wherein the plurality of video streams include a 2D video stream that constitutes 2D video for 2D playback, variations of composition of 3D video for 3D playback include (i) a combination of the 2D video stream and another video stream among the plurality of video streams and (ii) a combination of two or more video streams, among the plurality of video streams, other than the 2D video stream, and the transport stream includes 3D video specification information specifying video streams constituting the 3D video.

### [Advantageous Effects of the Invention]

The 3D video specification information, which indicates the combination of video streams required for 3D playback, exists in the transport stream. The display apparatus, when first performing 2D playback and then switching to 3D playback, refers to the 3D video specification information indicating the correlation between video streams contained in the transport stream and thereby identifies which of the video streams are necessary for 3D playback.

According to Claim 2, the 3D video specification information exists in the contents table. Hence, when the contents table is arranged at a head of the transport stream or when contents tables are arranged in the transport stream with predetermined intervals of time therebetween, the 3D video specification information is referred to by extracting packets storing the contents table from the transport stream. Thus, the video streams to be extracted are easily identified, and playback of 3D video is performed.

According to Claim 3, the 2D video specification information specifying the 2D video stream exists in the transport stream. Hence, the video stream necessary for 2D playback is identified, and 2D/3D compatible playback is performed.

According to Claim 4, information indicating stream identifiers each corresponding to the 2D video stream, the left-view video stream constituting the left-view video, and the right-view video stream constituting the right-view video exists in the transport stream. Thus, specification is made of video streams to be extracted for 2D playback and 3D playback. Accordingly, quick switching between the 2D and 3D modes, or quick switching between video streams to be extracted for the 2D and 3D modes is realized.

According to Claim 5, a flag indicating whether or not the 2D video stream matches one of the video streams constituting the 3D video exists in the contents table. Thus, specification of the structure of the transport stream is made by extracting the packet storing the contents table from the transport stream and referring to the flag.

According to Claim 6, various storing methods, such as the Side-by-Side and Top-and-Bottom formats, can be applied for packaging a left-view image and a right-view image to a frame. Thus, 3D material of various kinds which are obtained through conventional actions of video shooting can be used for the production of 3D contents.

According to Claim 7, the camera assignment information included in each of the stream descriptors indicates the camera channel configuration. Thus, the camera environment during the production of the contents is replicated during playback.

According to Claim 8, the contents table includes an indication of information indicating whether closed-caption subtitles included in the 2D video stream or closed-caption subtitles included in the video streams constituting the 3D video is to be used. Thus, identification of the closed-caption subtitle data to be used in each of 2D and 3D playback is performed by extracting the packet including the contents table from the transport stream and by referring to the contents table.

According to Claim 10, the 3D video specification information is written in the stream descriptors included in the stream information pieces of the contents table. Thus, specification of the video streams to be extracted is made by referring to the stream information pieces, and further, playback of 3D video is performed.

According to Claim 11, the stream information pieces stored in the contents table and respectively corresponding to the video streams each include indication of stream identifiers of video streams to be combined with the corresponding video stream. Thus, specification is made of one or more video streams required for 3D playback by referring to the stream information pieces.

### [Brief Description of the Drawings]

Fig. 1 illustrates a problem in distributing video in the Side-by-Side format.
Figs. 2A-2D illustrate usage of a playback device and a 2D digital television.
Fig. 3 illustrates an example of how a stereoscopic image is displayed.
Fig. 4 illustrates an example of how video in the Side-by-Side format is displayed.
Fig. 5 illustrates an example of a structure of frames for stereoscopic viewing.
Fig. 6 illustrates a structure of a transport stream.
Fig. 7 illustrates a structure of a video stream.
Fig. 8 illustrates in detail how a video stream is contained in a PES packet sequence.
Fig. 9 illustrates a structure of a TS packet.
Fig. 10 illustrates a data structure of a PMT.
Fig. 11 illustrates cropping area information and scaling information of a video.
Fig. 12 illustrates a specific example of the cropping area information of the video.
Fig. 13 illustrates a method for containing frame-packing information and a frame-packing information descriptor.
Fig. 14 illustrates examples of relationships between frame-packing information descriptors and pieces of frame-packing information.
Fig. 15 illustrates a playback device pertaining to embodiment 1.
Fig. 16 illustrates "processing priority" of the frame-packing information descriptors.
Fig. 17 illustrates "display switching start PTS" of the frame-packing information descriptors.
Fig. 18 illustrates a structure for containing left-view and right-view videos separately as different video streams in one transport stream.
Fig. 19 illustrates an efficient data format for ensuring encoding bit rate in a case where two video streams are used.
Fig. 20 illustrates 3D playback information descriptors.
Fig. 21 illustrates an exemplary encoding method for special playback in a case where two video streams are used.
Fig. 22 illustrates an exemplary multiplexing method for special playback and editing in a case where two video streams are used.
Fig. 23 illustrates a data creation device pertaining to embodiment 1.
Fig. 24 illustrates an example of generating parallax images of left-view video and right-view video according to a 2D video image and a depth map.
Fig. 25 illustrates a structure of a transport stream (2D/L + R) containing video used as right-view (R) video in 3D playback in addition to video that is used for 2D playback and that is also used as left-view (L) video in 3D playback.
Fig. 26 illustrates a structure of a transport stream (2D + L + R) containing two 3D video, namely the left-view (L) video and the right-view (R) video, in addition to 2D video.
Fig. 27 illustrates a configuration of a 3D_system_info_descriptor in a stream having the 2D + L + R structure.
Fig. 28 illustrates values that are set to 3D_playback_type.
Fig. 29 illustrates a configuration of a 3D_service_info_descriptor in a stream having the 2D + L + R structure.
Fig. 30 illustrates a configuration of a 3D_combi_info_descriptor in a stream having the 2D + L + R structure.
Fig. 31 illustrates a structure of a transport stream (2D + Side-by-Side) containing Side-by-Side format video in addition to 2D video.
Fig. 32 illustrates a configuration of the 3D_service_info_descriptor in a stream having the 2D + Side-by-Side structure.
Fig. 33 illustrates a configuration of the 3D_combi_info_descriptor in a stream having the 2D + Side-by-Side structure.
Fig. 34 illustrates a structure of a transport stream (2D + MVC) containing two pieces of video stream that are compression-coded under MVC, in addition to video used only in 2D playback.
Fig. 35 illustrates a configuration of the 3D_combi_info_descriptor in a stream having the 2D + MVC structure.
Fig. 36 illustrates a structure of a transport stream (2D + R1 + R2) containing multiple pieces of R video, each of a different perspective, in addition to video that is used for 2D playback and that is also used as the L video in 3D playback.
Fig. 37 illustrates a configuration of the 3D_system_info_descriptor in a stream having the 2D + R1 + R2 structure.
Fig. 38 illustrates a configuration of the 3D_service_info_descriptor in a stream having the 2D + R1 + R2 structure.
Fig. 39 illustrates a configuration of the 3D_combi_info_descriptor in a stream having the 2D + R1 + R2 structure.
Fig. 40 illustrates an internal structure of a data creation device 4000.
Fig. 41 is a flowchart illustrating a flow of processing during encoding by the data creation device 4000.
Fig. 42 illustrates an internal structure of a 3D digital television 4200.
Fig. 43 is a flowchart illustrating one example of a flow of processing during playback of a program by the 3D digital television 4200.
Fig. 44 is a flowchart illustrating a flow of processing of a 2D + SBS stream.
Fig. 45 is a flowchart illustrating a flow of processing of a 2D/SBS stream.
Fig. 46 is a flowchart illustrating a flow of processing of a 2D/L + R stream.
Fig. 47 is a flowchart illustrating a flow of processing of a 2D/L + R1 + R2 stream.
Fig. 48 is a flowchart illustrating a flow of processing of an MPEG 2 + AVC + AVC stream.
Fig. 49 is a flowchart illustrating a flow of processing of an MPEG 2 + MVC (Base) + MVC (Dependent) stream.

### [Description of Embodiments]

The following describes an embodiment of the present invention with reference to the drawings.

### (Embodiment 1)

The following describes a video format pertaining to the present embodiment, and a data creation method, a data creation device, a playback method, and a playback device for video in the video format.

First, brief description is provided on principles of stereoscopic viewing. Stereoscopic viewing is realized by a method using a holographic technology or a method using parallax images.

The first method of applying holographic technology is characterized in that objects are recreated stereoscopically and are perceived by humans in exactly the same way as when viewing objects in everyday life. However, although the generation of moving pictures according to this technology is possible in theoretical grounds, there are several requirements which need to be satisfied to actually realize holographic display. That is, a computer which is capable of performing an enormous amount of calculation for real-time generation of moving images is required, as well as a display device having a graphic resolution sufficient for displaying thousands of lines drawn within a single-millimeter space. Since such requirements are extremely difficult to satisfy at present, there are few, if any, examples of commercial realization of the holographic technology.

Subsequently, description is provided on the second method of applying parallax viewing. Generally, due to the positional difference between the right eye and the left eye, there is a slight difference between an image viewed by the right eye and an image viewed by the left eye. It is by utilizing this difference that humans are able to perceive images appearing in the eyes as stereoscopic images. A stereoscopic display that uses parallax images makes use of this effect to cause images on a flat surface to appear to be three dimensional.

This method is advantageous in that stereoscopic viewing can be realized simply by preparing two images of different perspectives, one for the right eye and one for the left eye. Here, the importance lies in ensuring that an image corresponding to the left or right eye is made visible to only the corresponding eye. As such, several technologies applying this method, including the alternate-frame sequencing method, have been put into practical use.

The alternate-frame sequencing method is a method where left-view images and right-view images are displayed in alternation along the chronological axis direction. The images displayed in alternation in such a manner cause the left and right scenes to overlap each other in the viewer's brain due to an afterimage effect, and thus are perceived as stereoscopic images.

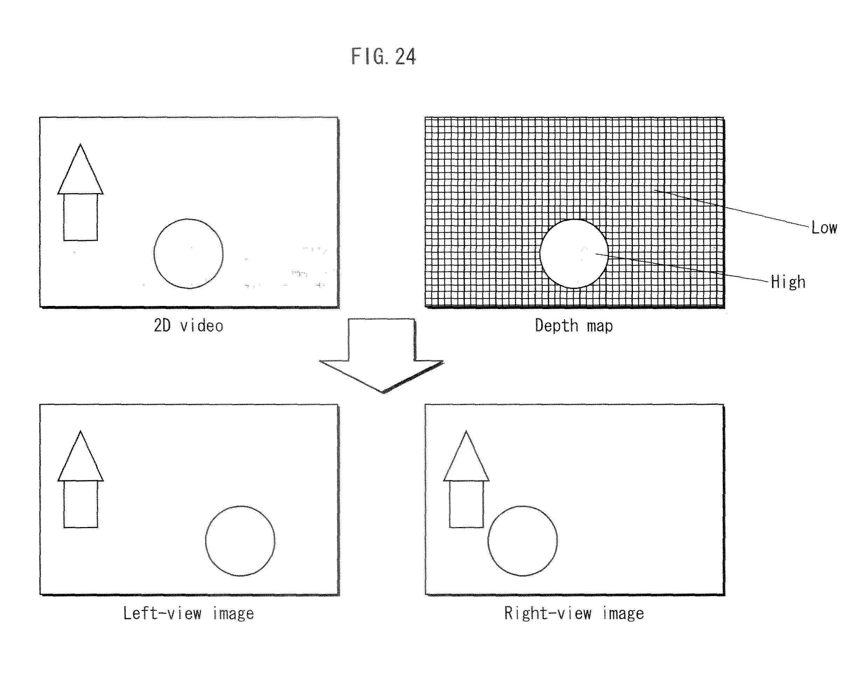

Further, another method for performing stereoscopic viewing using parallax images, other than the method where images are separately prepared for each of the right eye and the left eye, is the depth map method. In detail, when applying the depth map method, a depth map which includes depth values of a 2D image in units of pixels is separately prepared. Further, players and displays generate a left-view parallax image and a right-view parallax image by using the 2D image and the depth map. Fig. 24 is a schematical illustration of an example of creating a left-view parallax image and a right-view parallax image based on a 2D video image and a depth map. The depth map contains depth values corresponding to each pixel in the 2D image. In the example illustrated in Fig. 24, information indicating high depth is assigned to the round object in the 2D image according to the depth map, while other areas are assigned information indicating low depth. This information may be contained as a bit sequence for each pixel, and may also be contained as a picture image (such as an image where black indicates low-depth and white indicates high-depth). As such, a parallax image can be created by adjusting the parallax of a 2D image according to the depth values in the depth map. According to the example illustrated in Fig. 24, left-view and right-view parallax images are created in which the pixels of the round object have high parallax while the pixels of other areas have low parallax. This is because the round shape in the 2D video has high depth values while other areas have low depth values. The left-view and right-view parallax images so created are then used for stereoscopic viewing by performing display using the alternate-frame sequencing method or the like.

This concludes the description on the principles of stereoscopic viewing.

Next, description is provided on a usage of a playback device pertaining to the present embodiment.

The playback device pertaining to the present embodiment decodes 2D or 3D video and transfers the 2D or 3D video to a display. Hereinafter, description is provided taking a digital television as an example.

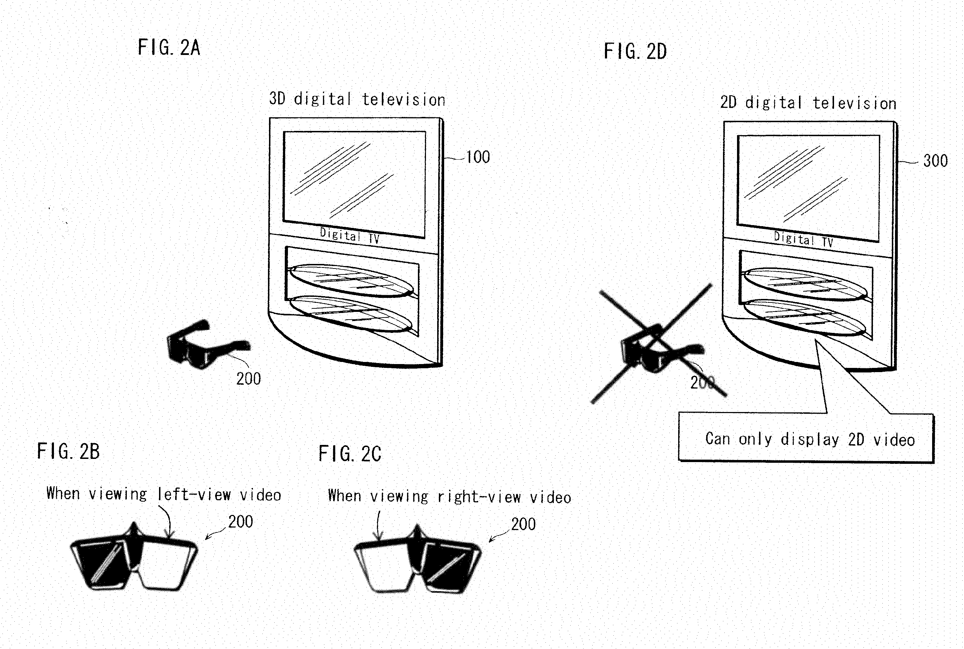

As shown in Figs. 2A and 2D, the digital television is either a playback device 100 on which 3D video can be viewed, or a 2D digital television 300 that can only play back 2D video and does not support 3D video playback.

Fig. 2A shows the usage of the playback device. As illustrated in Fig. 2A, the playback device includes a digital television 100 and 3D glasses 200 which are used by a user in combination.

The playback device 100 is capable of displaying 2D video and 3D video, and displays video by playing back streams that are included in broadcast waves received thereby.

Stereoscopic viewing on the playback device 100 is realized by the user wearing the 3D glasses 200. The 3D glasses 200 include liquid crystal shutters, and enable the user to view parallax images through alternate-frame sequencing. A parallax image is a pair of images composed of an image for the right eye and an image for the left eye and enables stereoscopic viewing by having each eye of the user view only the image corresponding thereto. Fig. 2B shows the state of the 3D glasses 200 when a left-view image is being displayed. At the moment when a left-view image is displayed on the screen, the aforementioned 3D glasses 200 make the liquid crystal shutter corresponding to the left eye transparent and make the liquid crystal shutter corresponding to the right eye opaque. Fig. 2C shows the state of the 3D glasses 200 when a right-view image is being displayed. At a moment when a right-view image is displayed on the screen, in a reversal of the above, the liquid crystal shutter corresponding to the right eye is made transparent and the liquid crystal shutter corresponding to the left eye is made opaque.

In addition, there exist playback devices which can operate by other methods than the alternate-frame sequencing previously described. In contrast to the above method, in which left and right pictures alternate along the chronological axis, a left-view picture and a right-view picture can be simultaneously displayed on the screen so as to alternate along the vertical axis and be made to pass through a semi-cylindrical lenticular lens on the display surface. The result is that the pixels forming the left-view picture form an image only for the left eye and the pixels forming the right-view picture form an image only for the right eye, with the result being a parallax picture shown to both eyes, which perceive the picture in 3D. Other devices, such as liquid crystal elements, may be used instead of the lenticular lens if given the same function thereas. Alternatively, a polarized light method may be used in which stereoscopic viewing is enabled by providing a vertically-polarizing filter for the left-view pixels and a horizontally-polarizing filter for the right-view pixels. When the viewer views the display through polarized glasses configured to provide vertically-polarized light to the left eye and horizontally-polarized light to the right eye, a stereoscopic image is perceived.

Various other technologies for stereoscopic viewing using parallax images have been proposed, including the two-color separation method and the like. Although the present embodiment is described through an example using the alternate-frame sequencing method, no restriction thereto is intended, and other parallax viewing methods are also applicable.

As shown in Fig. 2D, the 2D digital television 300 cannot realize stereoscopic viewing, unlike the playback device 100. The 2D digital television 300 can only display 2D video, and displays video by playing back streams that are included in broadcast waves received thereby.

This concludes the description on the usage of the playback device.

Next, a structure of a typical stream transmitted by digital television broadcasts and the like will be explained.

Digital television broadcasts and the like are transmitted using digital streams in the MPEG 2 transport stream format. The MPEG 2 transport stream format is a standard for multiplexing and transmitting various streams including audio and visual streams. In specific, the standard is specified by ISO/IEC13818-1 and ITU-T Recc. H222.0.

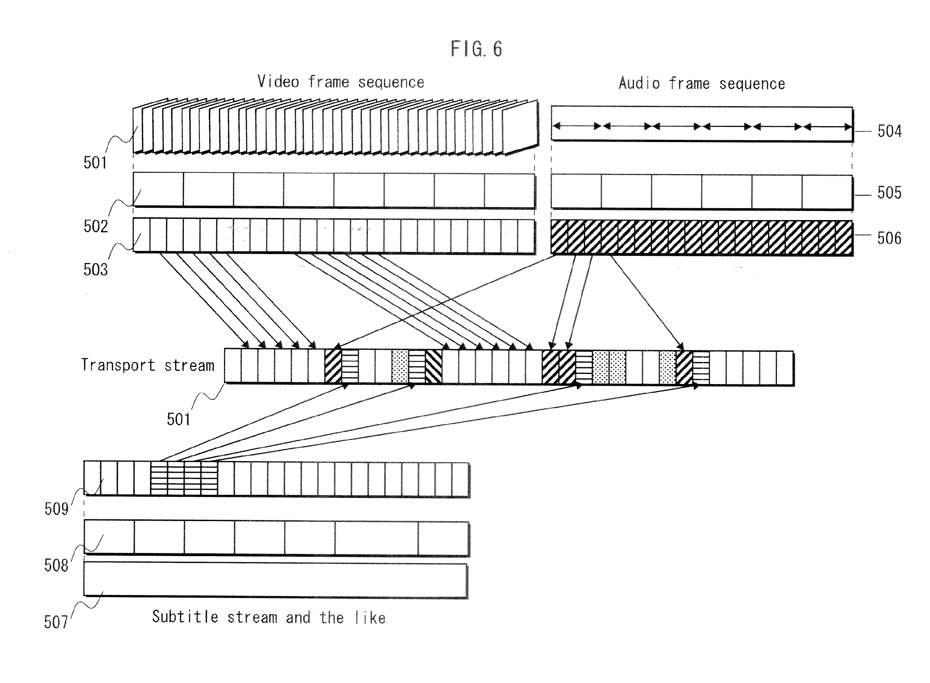

Fig. 6 illustrates a structure of a digital stream in the MPEG 2 transport stream format. As illustrated in Fig. 6, a transport stream is obtained by multiplexing a video stream, an audio stream, a subtitle stream and the like. A video stream contains the main video portion of a program, an audio stream contains the main voice track and sub-voice tracks of the program, and a subtitle stream contains subtitle information of the program. A video stream is encoded and recorded according to a standard such as MPEG 2, MPEG-4 AVC, or similar. An audio stream is compressed, encoded and recorded according to a standard such as Dolby AC-3, MPEG 2 AAC, MPEG-4 AAC, HE-AAC, or similar.

The following describes a structure of a video stream. Video compression and encoding is performed under MPEG 2, MPEG-4 AVC, SMPTE VC-1, and so on by making use of spatial and temporal redundancies in the motion picture to compress the data amount thereof. One example of such a method that takes advantage of the temporal redundancies of the video in the compression of data amount is the inter-picture predictive coding. According to the inter-picture predictive coding, a given picture is encoded by using, as a reference picture, another picture that is displayed earlier or later than the picture to be encoded. Further, detection is made of a motion amount from the reference picture, and difference values indicating the differences between the motion-compensated picture and the picture to be encoded are produced. Finally, by eliminating spatial redundancies from the differences so produced, compression of the amount of data is performed.

In the following explanations, a picture to which intra-picture coding is applied without the use of a reference picture is referred to as an I-picture. Here, note that a picture is defined as a unit of encoding that encompasses both frames and fields. Also, a picture to which inter-picture coding is applied with reference to one previously-processed picture is referred to as a P-picture, a picture to which inter-picture coding is applied with reference to two previously-processed pictures at once is referred to as a B-picture, and a B-picture referenced by other pictures is referred to as a Br-picture. Furthermore, frames in a frame structure and fields in a field structure are referred to as video access units hereinafter.

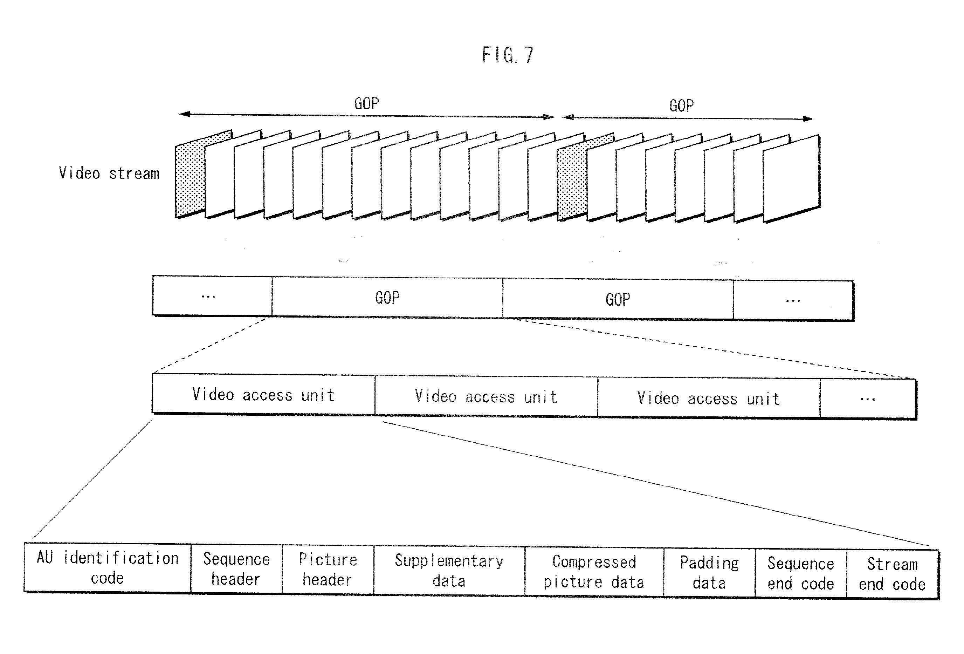

A video stream has a hierarchical structure as illustrated in Fig. 7. More specifically, a video stream is made up of multiple GOPs (Groups of Pictures). The GOPs are used as the basic unit of encoding, which enables motion picture editing and random access of the motion picture. A GOP is composed of one or more video access units. A video access unit is a unit containing encoded picture data, specifically a single frame in a frame structure and a single field in a field structure. Each video access unit is composed of an AU identification code, a sequence header, a picture header, supplementary data, compressed picture data, padding data, a sequence end code, a stream end code and the like. Under MPEG-4 AVC, all data is contained in units called NAL units.

The AU identification code is a start code indicating the start of the access unit. The sequence header is a header containing information common to all of the video access units that make up the playback sequence, such as the resolution, frame rate, aspect ratio, bit rate and the like. The picture header is a header containing information indicating an encoding format applied to the entire picture and the like. The supplementary data are additional data not required to decode the compressed data, such as closed-caption text information that can be displayed on a television simultaneously with the video and information about the structure of the GOP. The compressed picture data includes compression-coded picture data. The padding data are meaningless data that pad out the format. For example, the padding data may be used as stuffing data to maintain a fixed bit rate. The sequence end code is data indicating the end of a playback sequence. The stream end code is data indicating the end of the bit stream.

The internal configuration of the AU identification code, the sequence header, the picture header, the supplementary data, the compressed picture data, the padding data, the sequence end code, and the stream end code varies according to the video encoding method applied.

For example, under MPEG-4 AVC, the AU identification code is an AU delimiter (Access Unit Delimiter), the sequence header is an SPS (Sequence Parameter Set), the picture header is a PPS (Picture Parameter Set), the compressed picture data consist of several slices, the supplementary data are SEI (Supplemental Enhancement Information), the padding data are filler data, the sequence end code corresponds to "End of Sequence", and the stream end code corresponds to "End of Stream".

Under MPEG 2, the sequence headers are "sequence_Header", "sequence_extension", and "group_of_pictures_header", the picture headers are "picture_header" and "picture_coding_extension", the compressed picture data consist of several slices, the supplementary data are user data, and the sequence end code corresponds to "sequence_end_code". Although no AU identification code is present in this case, the end points of the access unit can be determined by using each of the header start codes.

In addition, not all data are required at all times. For instance, the sequence header is only needed for the first video access unit of a GOP, and may be omitted from other video access units. Further, depending on the encoding format, a given picture header may simply reference the previous video access unit, without any picture headers being contained in the video access unit itself.

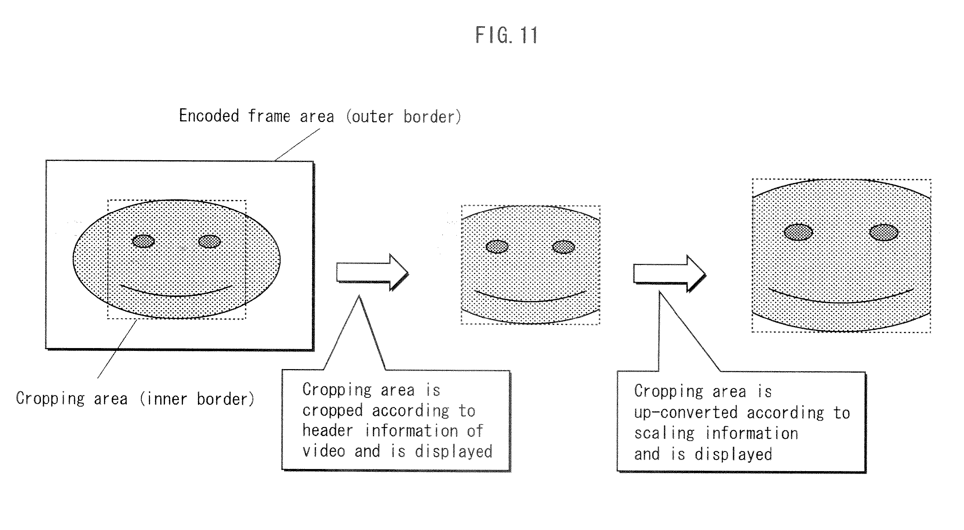

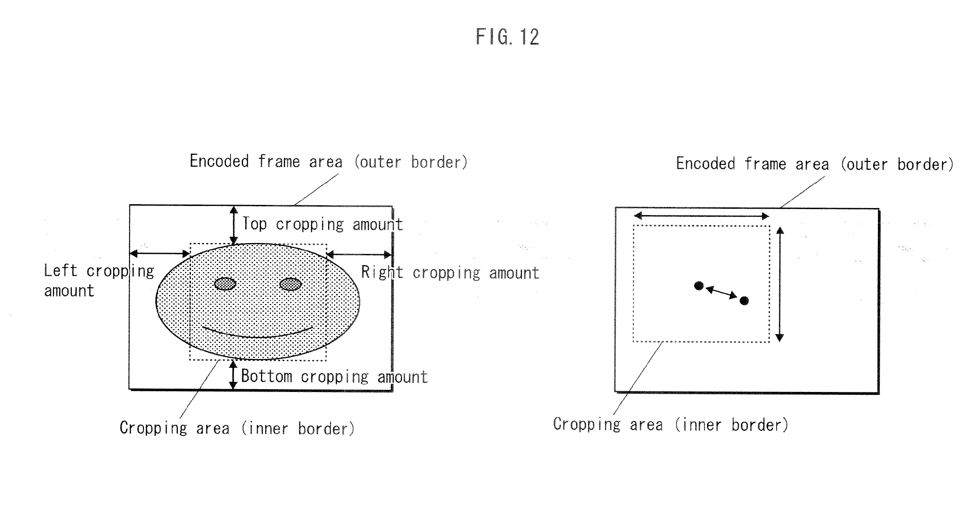

Next, description is provided on cropping area information and scaling information with reference to Fig. 11. Depending on the video encoding format, the area of an encoded frame that is actually used for displaying may vary. As illustrated in Fig. 11, the area within a given encoded frame that will actually be displayed can be designated as a "cropping area". For example, under MPEG-4 AVC, the cropping area can be designated by using a "frame_cropping" information field included in the SPS. As shown in the left-hand part of Fig.12, the "frame_cropping" information indicates the upper, lower, left, and right boundaries of the cropping area such that the differences thereof from the upper, lower, left, and right boundaries of the encoded frame indicate the area to be cropped out. More precisely, to designate a cropping area, a flag ("frame_cropping_flag") is set to 1, and the upper, lower, left, and right areas to be cropped out are respectively indicated as the fields "frame_crop_top_offset", "frame_crop_bottom_offset", "frame_crop_left_offset", and "frame_crop_right_offset". Under MPEG 2, the cropping area can be designated by using horizontal and vertical sizes (display_horizontal_size and display_vertical_size of sequence_display_extension) of the cropping area and difference information (frame_centre_horizontal_offset and frame_centre_vertical_offset of picture_display_extension) indicating a difference between a center of the encoded frame area and a center of the cropping area. Also, depending on the video encoding format, scaling information may be present that indicates the scaling method used to actually display the cropping area on the television or the like. The scaling information is, for example, set as an aspect ratio. The playback device uses the aspect ratio information to up-convert the cropping area, thereby performing displaying of the up-converted cropping area. For example, under MPEG-4 AVC, the SPS contains aspect ratio information ("aspect_ratio_idc") as scaling information. Under MPEG-4 AVC, to expand a 1440 × 1080 pixel cropping area to a 1920 × 1080 pixel resolution for displaying, a 4:3 aspect ratio is designated. In this case, up-conversion by a factor of 4/3 takes place in the horizontal direction (1440 × 4/3 = 1920) for an expanded 1920 × 1080 pixel resolution display. Under MPEG 2, the sequence_header similarly contains aspect ratio information ("aspect_ratio_information").

Each of the streams multiplexed in the transport stream is identified by a stream ID called a PID. A demultiplexer can extract a given stream by extracting the packets with the appropriate PID. The correlation between the PIDs and the streams is stored in descriptors contained in a PMT packet, description on which is provided in the following.

Fig. 6 is a schematic diagram illustrating the manner in which a transport stream is multiplexed. First, a video stream 501 composed of a plurality of video frames and an audio stream 504 composed of a plurality of audio frames are respectively converted into PES packet sequences 502 and 505, and then converted into TS packets 503 and 506. Similarly, data of a subtitle stream 507 are converted into PES packet sequences 508, and then further converted into TS packets 509. The MPEG 2 transport stream 513 is yielded by multiplexing these TS packets into a single stream.

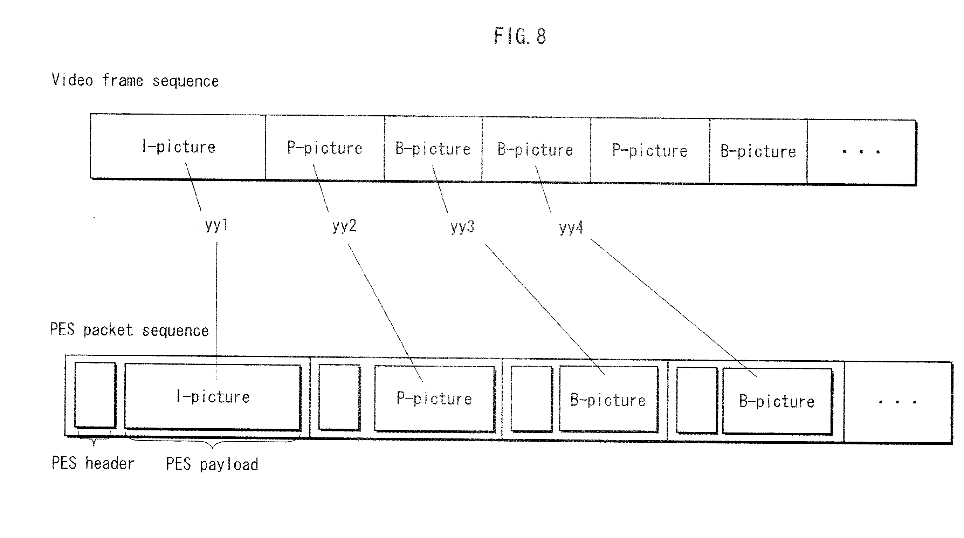

Fig. 8 illustrates further details of the manner in which a video stream is contained in a PES packet sequence. The top row of the figure shows a video frame sequence of a video stream. The second row indicates a PES packet sequence. As shown by the arrows yy1, yy2, yy3, and yy4 in Fig. 8, the video presentation units of the video stream, namely the I-pictures, B-pictures, and P-pictures, are individually split and contained in the PES packets as the payloads thereof. Each PES packet has a PES header, and the PES header contains a PTS (Presentation Time-Stamp) indicating a display time of the corresponding picture, a DTS (Decoding Time-Stamp) indicating a decoding time of the corresponding picture and the like.

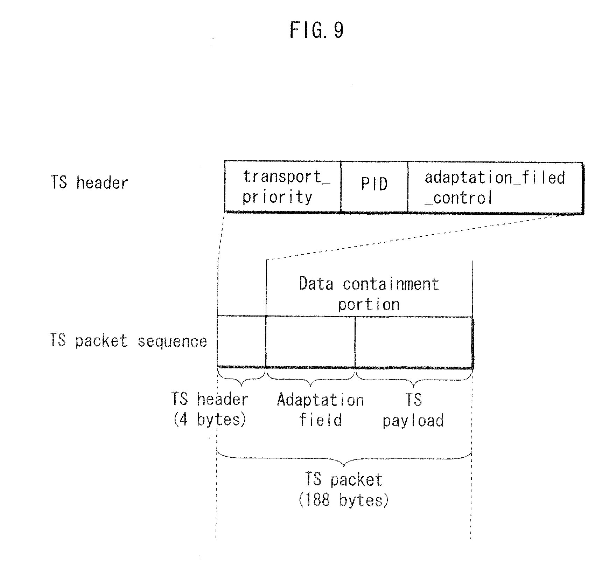

Fig. 9 illustrates the data structure of TS packets that compose a transport stream. A TS packet is a packet having a fixed-length of 188 bytes, and is composed of a 4 byte TS header, an adaptation field, and a TS payload. The TS header is composed of information such as transport_priority, PID, and adaptation_field_control. As previously mentioned, a PID is an ID identifying a stream that is multiplexed within the transport stream. The transport_priority is information identifying different types of packets among the TS packets having the same PID. The adaptation_field_control is information for controlling the configuration of the adaptation field and the TS payload. The adaptation_field_control indicates whether only one or both of the adaptation field and the TS payload are present, and if only one of the two is present, indicates which. In specific, the adaptation_field_control is set to 1 to indicate the presence of the TS payload only, is set to 2 to indicate the presence of the adaptation field only, and set to 3 to indicate the presence of both the TS payload and the adaptation field.

The adaptation field is an area for storing PCR and similar information, as well as stuffing data used to pad out the TS packet to 188 bytes. The PES packets are split and contained in the TS payload.

In addition to video, audio, subtitle, and other streams, the TS packets included in the transport stream can also be for a PAT (Program Association Table), a PMT (Program Map Table), a PCR (Program Clock Reference) and the like. These packets are known as PSI (Program Specific Information). The PAT indicates the PID of the PMD used within the transport stream. In addition, the PAT is registered with a PID of 0. The PMT includes the PIDs of each of the streams included in the transport stream, such as a video stream, an audio stream, and a subtitle stream, and also includes attribute information of each of the streams corresponding to the PIDs included therein. Further, the PMT also includes various descriptors pertaining to the transport stream. For instance, copy control information indicating whether or not an audio-visual stream may be copied is included among such descriptors. The PCR has STC (System Time Clock) information corresponding to the time at which the PCR packet is to be transferred to the decoder. This information enables synchronization between the decoder arrival time of the TS packet and the STC, which serves as the chronological axis for the PTS and DTS.

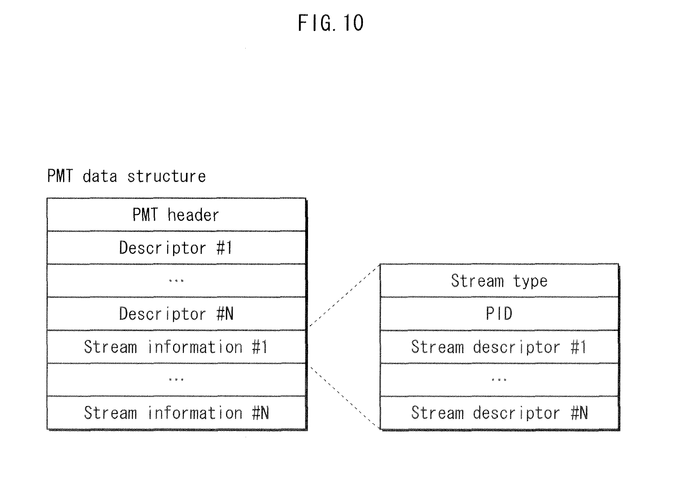

Fig. 10 illustrates the data structure of the PMT in detail. A PMT header containing such information as the length of the data included in the PMT is arranged at the head of the PMT. The PMT header is followed by several descriptors pertaining to the transport stream. The aforementioned copy control information and the like are written in such descriptors. The descriptors are followed by several pieces of stream information pertaining to each of the streams included in the transport stream. Each piece of stream information includes: a stream type; a stream PID; and stream descriptors including descruption of attribute information (such as a frame rate and an aspect ratio) of the corresponding stream. The stream type identifies the stream compression codec or the like of the stream.

This concludes the description on the structure of a typical stream transmitted by digital television broadcasts and the like.

Next, a typical video format used to realize parallax images used for stereoscopic viewing will be explained.

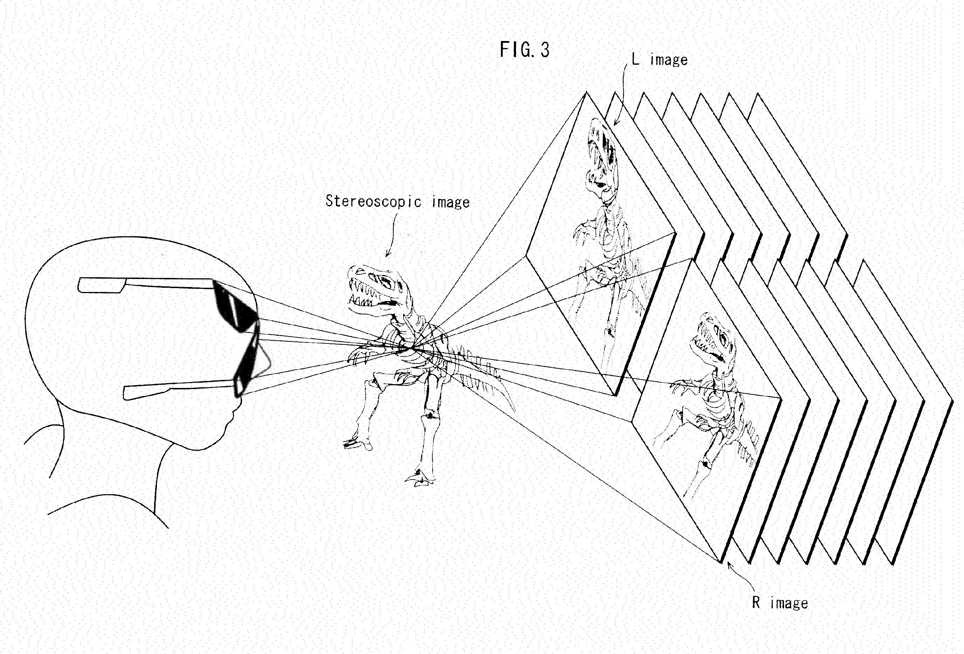

A stereoscopic viewing scheme using parallax images involves preparing respective pictures for the right eye and the left eye such that each eye sees only pictures corresponding thereto in order to achieve the stereoscopic effect. Fig. 3 shows the head of a user on the left-hand side, and, on the right-hand side, an example of a dinosaur skeleton as viewed by the left eye as well as by the right eye. By repeatedly alternating the transparency and opacity for the left and right eyes, the user's brain is made to combine the views of each eye from afterimage effects, resulting in the perception that a stereoscopic object exists along a imaginary line extending from the middle of the head.

In the context of parallax images, images viewed by the left eye are called left-view images (L-images) and images viewed by the right eye are called right-view images (R-images). Furthermore, a motion picture in which each picture is an L-image is called the left-view video and a motion picture in which each picture is an R-image is called the right-view video.

There exist 3D video methods in which the left-view video and the right-view video are combined and compression-coded, such as the frame compatible method and the service compatible method.

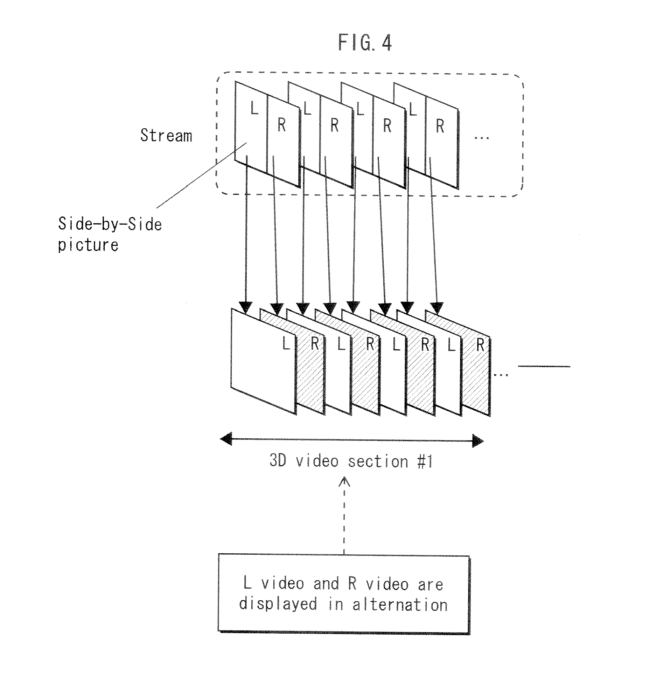

The first of these, the frame-compatible method, involves line-skipping or shrinking each of the pictures corresponding to the left-view video and the right-view video so as to combine the pictures into one, and is performed using ordinary motion picture compression-coding methods. An example of this is the Side-by-Side format as illustrated in Fig. 4. The Side-by-Side format horizontally shrinks each of the pictures corresponding to the left-view video and the right-view video by 1/2 and lines up the results side by side to form a single picture. A stream is yielded from the motion picture made up of pictures so formed by performing ordinary motion picture compression-coding. On the other hand, during playback, the stream is decoded into a motion picture according to ordinary motion picture compression-coding methods. Further, each picture within the decoded motion picture is split into left and right images which are respectively expanded by a horizontal factor of two to obtain the pictures corresponding to the left-view video and the right-view video. The images so obtained of the left-view video (L-images) and the right-view video (R-images) are displayed in alternation. Thus, as illustrated in Fig. 2, a stereoscopic image can be obtained therefrom. Aside from the Side-by-Side format, the frame-compatible method can be achieved using the Top-and-Bottom format, in which the L and R images are aligned vertically, or the Line Alternative format, in which the lines within each picture are interleaved lines from the L and R images, and the like.

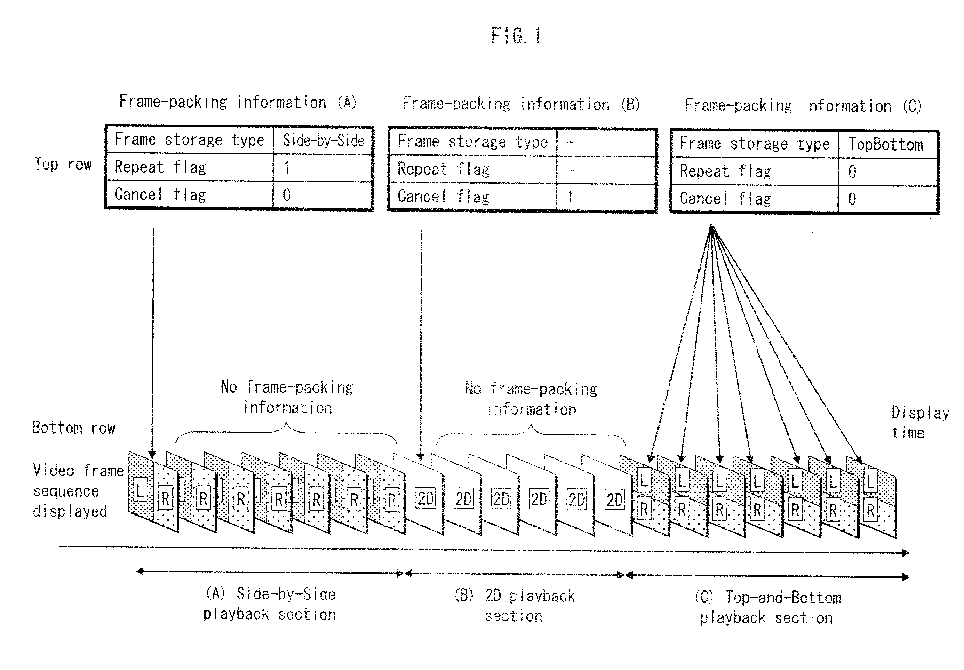

A video stream includes frame-packing information. By using the frame-packing information, the method applied for containing left-view and right-view images in a video stream for stereoscopic viewing can be identified. Under MPEG-4 AVC, for example, the frame-packing information corresponds to Frame_packing_arrangement SEI. Fig. 1 provides explanation of the frame-packing information. The bottom row in Fig. 1 illustrates a video frame sequence. Here, playback is performed of Side-by-Side video during section (A), playback is performed of 2D video during section (B), and playback is performed of Top-and-Botttom video during section (C). The top row of Fig. 1 shows examples of frame-packing information during such playback sections. A piece of frame-packing information includes a frame storage type, a cancel flag, and a repeat flag. The frame storage type is information indicating the format applied for containing stereoscopic left-view and right-view images within a frame. More specifically, the frame storage type identifies the formats such as the Side-by-Side format, the Top-and-Bottom format, the Checkerboard format, and the Line-by-Line format which have been already described in the above. In the Frame_packing_arrangement under MPEG-4 AVC, the frame storage type corresponds to Frame_packing_arrangement_type. The repeat flag indicates a period during which the piece of frame-packing information is valid. A value 0 set to the repeat flag indicates that the piece of frame-packing information is valid with respect to a corresponding frame. On the other hand, a value 1 set to the repeat flag indicates that the piece of frame-packing information is valid during the present video sequence or until the arrival, in display order, of a subsequent frame having another piece of frame-packing information. In the Frame_packing_arrangement under MPEG-4 AVC, the repeat flag corresponds to Frame_packing_arrangement_repetition_period. The cancel flag cancels the validity of a preceding piece of frame-packing information, or more specifically, the valid period indicated by the repeat flag. A value 1 set to the cancel flag cancels the piece of frame-packing information having been previously transmitted, and a value 0 set to the cancel flag indicates that a corresponding piece of frame-packing information is valid. In the Frame_packing_arrangement under MPEG-4 AVC, the cancel flag corresponds to Frame_packing_arrangement_cancel_flag.

A frame storage type, a repeat flag, and a cancel flag of a frame-packing information piece (A), which is contained in a frame at the head of the Side-by-Side playback section, respectively indicate "Side-by-Side", "1", and "0". Since the frames of the Side-by-Side playback section other than the frame at the head do not contain frame-packing information pieces, and further, since the repeat flag of the frame-packing information piece (A) indicates "1", the frame-packing information piece (A) is valid for the rest of the frames of the Side-by-Side playback section. The cancel flag of a frame-packing information piece (B), which is contained in a frame at the head of the 2D playback section, indicates "1". However, the frame-packing information piece (B) does not include indication of a frame storage type and a repeat flag. Since the 2D playback section does not require frame-packing information, frame-packing information pieces are not contained in the rest of the frames following the frame at the head of the 2D playback section, which includes the cancel flag "1" cancelling the validity of the frame-packing information (A). Finally, in the Top-and-Bottom playback section, a frame-packing information piece (C) is contained in each of the frames composing the section. The frame storage types, repeat flags, and cancel flags of the frame-packing information pieces (C) respectively indicate "Top-and-Bottom", "0", and "0". Since the repeat flag of a frame-packing information piece (C) indicates "0", the same frame-packing information piece (C) needs to be contained in each of the frames in order to indicate that the frames during this section have the Top-and-Bottom format.

As such, by containing frame-packing information in a video stream, the playback device can refer to such information and thereby perform stereoscopic displaying according to the formats as indicated by the information.

Subsequently, description is provided on the service compatible method. The service compatible method is realized by using a left-view video stream and a right-view video stream respectively yielded by digitalizing and compression-coding left-view video and right-view video.

Further, one variation of the service compatible method is the multi-view coding method, where compression-coding of the left-view video and the right-view video is performed especially by applying inter-picture predictive coding. In inter-picture predictive coding, compression-coding is performed by making use of correlations between the perspectives.

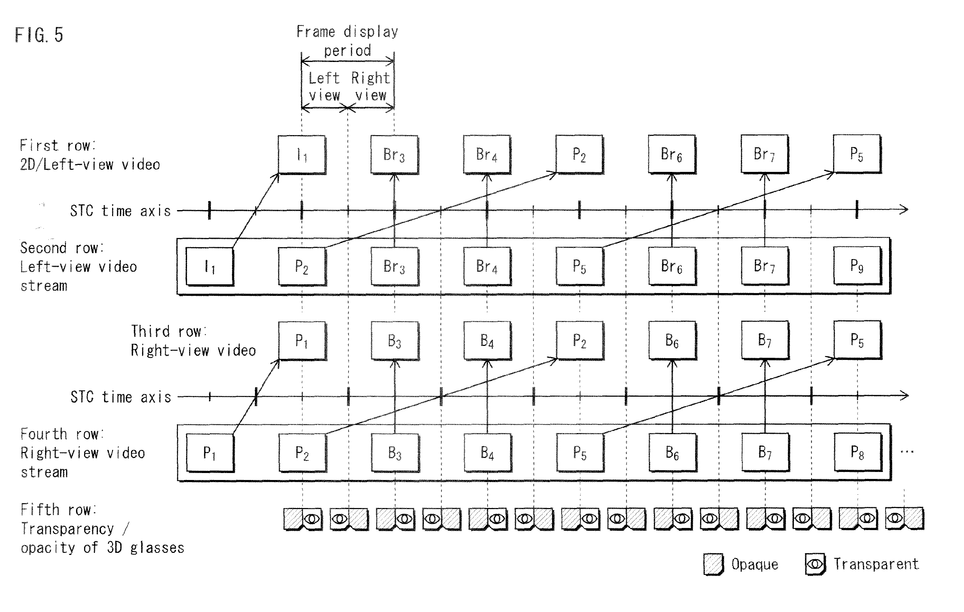

Fig. 5 illustrates an example of the internal structure of the left-view and right-view video streams used in the multi-view coding method for realizing stereoscopic viewing.

The second row of Fig. 5 shows the internal structure of the left-view video stream. In specific, the left-view video stream includes the picture data I₁, P₂, Br₃, Br₄, P₅, Br₆, Br₇, and P₉. These picture data are decoded in accordance with the Decode Time Stamp (DTS). The top row shows the left-view images. The left-view images are played back by playing back the decoded picture data I₁, Br₃, Br₄, P₂, Br₆, Br₇, and P₅ in the stated order and in accordance with the PTS. In Fig. 5, a picture to which intra-picture coding is applied without the use of a reference picture is called an I-picture. Here, note that a picture is defined as a unit of encoding that encompasses both frames and fields. Also, a picture to which inter-picture coding is applied with reference to one previously-processed picture is called a P-picture, a picture to which inter-picture predictive coding is applied with reference to two previously-processed pictures at once is called a B-picture, and a B-picture referenced by other pictures is called a Br-picture.

The fourth row of the Fig. 5 shows the internal structure of the right-view video stream. In specific, the right-view video stream includes the picture data P₁, P₂, B₃, B₄, P₅, B₆, B₇, and P₈. These picture data are decoded in accordance with the DTS. The third row shows the right-view images. The right-view images are played back by playing back the decoded picture data P₁, B₃, B₄, P₂, B₆, B₇, and P₅ in the stated order and in accordance with the PTS. Here, it should be noted that stereoscopic playback by alternate-frame sequencing displays one of the pair sharing the same PTS, i.e. either the left-view image or the right-view image, with a delay equal to half the PTS interval (hereinafter referred to as a "3D display delay") following the display of the image of the other perspective.

The fifth row shows how the 3D glasses 200 change between different states thereof. As shown in the fifth row, the right-eye shutter is closed whenever left-view images are viewed, and the left-eye shutter is closed whenever right-view images are viewed.

In addition to inter-picture predictive coding that makes use of correlations between pictures along the chronological axis, the left-view video stream and the right-view video stream are also compressed using inter-picture predictive coding that makes use of correlations between the different perspectives. The pictures of the right-view video stream are compressed by referencing pictures from the left-view video stream with the same display time.

For example, the leading P-picture of the right-view video stream references an I-picture from the left-view video stream, the B-pictures of the right-view video stream reference Br-pictures from the left-view video stream, and the second P-picture of the right-view video stream references a P-picture from the left-view video stream.

Among the compression-coded left-view video streams and right-view video streams, a compression-coded stream that can be decoded independently is termed a "base view video stream". Further, among the left-view video streams and right-view video streams, a video stream that is compression-coded according to the inter-frame correlations with the individual picture data pieces composing the base view video stream and that can only be decoded after the base view video stream has been decoded is termed a "dependent view stream". The base view video stream and the dependent view stream may be contained and transferred as separate streams, or else may be multiplexed into a single stream, such as an MPEG 2-TS stream or the like.

One of such inter-view correlation-based compression methods of the multiview coding method is described by the Multiview Video Coding (MVC) amendment to the MPEG-4 AVC / H.264 standard. The Joint Video Team (JVT), which is a partnership effort by the ISO / IEC MPEG and the ITU-T VCEG, completed the formulation of an amended specification based on the MPEG-4 AVC/H.264, which is referred to as the Multiview Video Coding (MVC) in July 2008. MVC is a standard for encoding video that encompasses a plurality of perspectives, and makes use not only of temporal similarities but also of inter-view similarities for predictive coding. Thus, MVC has achieved improved compression efficiency in comparison with compression applied independently to each of several perspectives.

This concludes the description provided on a typical video format used to realize parallax images used for stereoscopic viewing.

### (Data Format for Storing 3D Video)

Subsequently, description is provided on a data format for storing 3D video pertaining to the present embodiment with reference to the drawings.

As illustrated in Fig. 1, as the encoding method for containing frame-packing information in a video frame sequence, two types of methods may coexist. That is, a case where a frame-packing information piece is stored only in a frame at the head of a playback section, as in the example of frame-packing information pieces (A) and (B), and a case where a frame-packing information piece is stored to each of the frames composing the video frame sequence, as in the example of frame-packing information pieces (C), may coexist. The coexistence of different methods for containing frame-packing information in a video frame sequence as described above leads to inefficiency of the processing performed by playback devices and editing devices. That is, for instance, when performing jump-in playback of the Side-by-Side playback section (A) from a video frame other than that at the head of the Side-by-Side playback section (A), the frame-packing information piece contained in the frame at the head of the Side-by-Side playback section (A) needs to be analyzed and obtained. Further, for instance, when performing playback of the Top-and-Bottom playback section (C), analysis is required of the frame-packing information piece corresponding to each of the frames composing the Top-and-Bottom playback section (C), and thus processing load increases. As such, a video format structure as described in the following is adopted in the present embodiment. The video format structure pertaining to the present embodiment allows playback devices to specify, in advance, the encoding method applied for containing frame-packing information in a video frame sequence, and thereby enhances the efficiency of playback processing performed by playback devices.

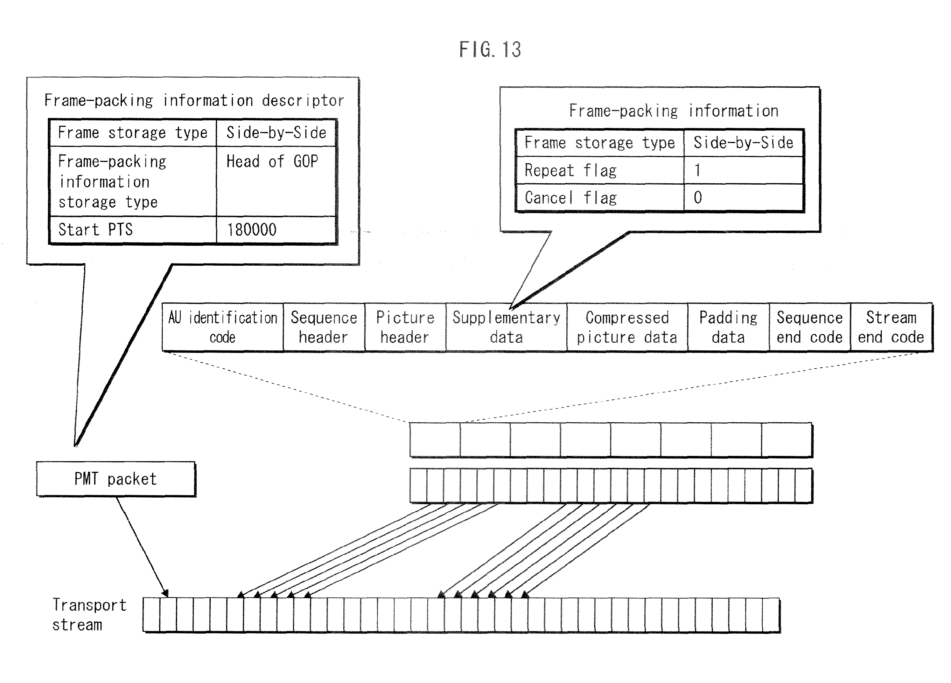

Explanation is provided of the structure of the video format pertaining to the present embodiment with reference to Fig. 13. Illustration is provided in Fig. 13 taking as an example a case where 3D video which is in the frame compatible, Side-by-Side format is contained in the transport stream. The video stream contained in the transport stream illustrated in Fig. 13 is compressed applying a video coding method such as MPEG-4 AVC, MPEG 2, or the like.

The supplementary data of the video stream contains frame-packing information. Description has been made in the above on the frame-packing information with reference to Fig. 1. As already described in the above, the frame-packing information includes a frame storage type, a repeat flag, and a cancel flag. Here, as described with reference to Fig. 1, the frame-packing information need not be contained in the supplementary data of all video access units. That is, the frame-packing information may be contained only in a video access unit at the head of a GOP and not in the rest of the video access units. In such a case, a value "1" is set to the repeat flag.

The PMT packet contains a frame-packing information descriptor. The frame-packing information descriptor is prepared for each video stream contained in the transport stream. Each frame-packing information descriptor contains attribute information of the frame-packing information included in the supplementary data of the corresponding video stream. More specifically, the frame-packing information descriptor contains "frame storage type", "frame-packing information storage type", and "start PTS".

The frame storage type of the frame-packing information descriptor is similar to the frame storage type of the frame-packing information, and indicates a frame storage method (such as the Side-by-Side format) applied to the stereoscopic video of the corresponding video stream. Further, the information in the frame storage type of the frame-packing information descriptor matches the information in the frame storage type of the frame-packing information included in the supplementary data of the corresponding video stream. By referring to the frame storage type of the frame-packing information descriptor, the playback device is able to determine the frame storage method applied to the stereoscopic video without analyzing the video stream. Hence, the playback device can determine the 3D display method to be applied in advance, and is able to perform processing that is required for 3D display, such as OSD generation for 3D display, prior to the decoding of the video stream.

The frame-packing information storage type indicates the manner in which frame-packing information is inserted in the corresponding video stream. As described with reference to Fig. 1, the frame-packing information may be contained only in a video access unit at the head of a GOP and not in the rest of the video access units. In such a case, a value "1" is set to the repeat flag. In contrast, the frame-packing information may also be contained in all of the frames composing the video sequence. In such a case, a value "0" is set to the repeat flag. In specific, the frame-packing information storage type is information for specifying a storage method of the frame-packing information. That is, if the frame-packing information storage type indicates "in units of GOPs", the frame-packing information is stored only in the supplementary data of the video access unit at the head of a GOP, and if the frame-packing information storage type indicates "in units of access units", the frame-packing information is stored in the supplementary data of all video access units. By referring to the frame-packing information storage type, the playback device is able to determine the storage method of the frame-packing information without analyzing the video stream. Hence, the playback device is able to perform playback and editing with an enhanced degree of efficiency. Further, when the playback device also performs jump-in playback from a frame other than that at the head of a GOP, in addition to performing playback from a frame at the head of a GOP, for instance, the playback device can be controlled to perform playback from a frame at the head of a GOP under certain situations. That is, the playback device, by referring to the frame-packing information storage type, may always perform playback from a frame at the head of a GOP when the frame-packing information storage type indicates "the first frame of the GOP".

In addition, the frame-packing information descriptor may contain information indicating whether or not changes in attributes take place in units of GOPs. By providing the frame-packing information descriptor with such information, a clear indication is made, for instance, that the same frame-packing information is contained in all frames within the GOP when (i) the frame-packing information storage type indicates "in units of frames" and (ii) the above-mentioned information indicates that no change in attributes takes place within the GOP. In such a case, analysis of the frame-packing information pieces of frames other than the frame at the head of the GOP in the video stream can be skipped.

The start PTS indicates a time point at which the corresponding frame-packing information descriptor becomes valid. Since, in general, the position of the PMT packet in the transport stream does not coincide with the position at which the video stream is multiplexed, it is impossible to know the time point, in relation with a display time of the video stream, at which the corresponding frame-packing information descriptor becomes valid. Accordingly, by referring to the start PTS, the playback device can be notified of when the frame-packing information descriptor becomes valid. Further, a restriction may be imposed on the start PTS such that the start PTS indicates a PTS provided to the video. In such a case, a clear instruction is made to the playback device of synchronization with the video. Further in addition, so as to ensure that the playback device can refer to the frame-packing information descriptor prior to the decoding of the video, a PMT packet storing a frame-packing information descriptor including a start PTS corresponding to a PTS of a given video access unit may be arranged ahead of the video access unit in the order in which multiplexing (encoding) is performed. Also, when a plurality of PMT packets each including the start PTS described above exist, arrangement may be made such that only the first PMT packet having the start PTS is arranged ahead of other PMT packets in the order in which multiplexing (encoding) is performed.

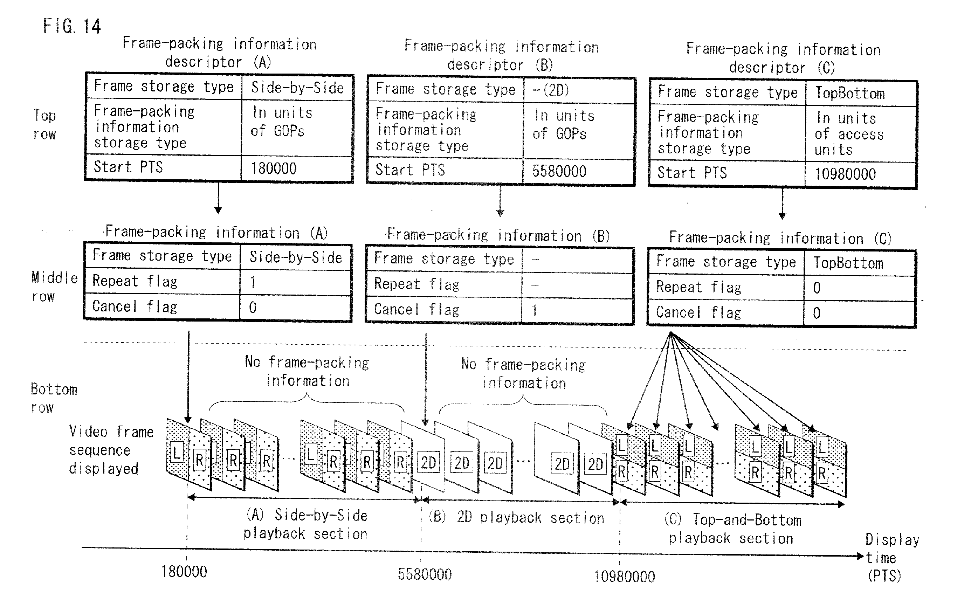

Fig. 14 illustrates examples of correlations between frame-packing information descriptors and frame-packing information pieces. The bottom row of Fig. 14 illustrates video frame sequences in the order in which they are displayed. Here, playback is performed of Side-by-Side video during section (A), playback is performed of 2D video during section (B), and playback is performed of Top-and-Botttom video during section (C). The middle row of Fig. 14 illustrates examples of frame-packing information pieces in such playback sections. Note that the configuration illustrated here is the same as that illustrated in Fig. 1. Further, the top row of Fig. 14 shows a configuration of frame-packing information descriptors under this data configuration.

A frame-packing information descriptor (A) includes information corresponding to the frame-packing information piece of the Side-by-Side playback section (A). Each value of the frame-packing information descriptor (A) is set as provided in the following. The frame storage type is set to "Side-by-Side", which is the same as the frame storage type of the corresponding frame-packing information piece. The frame-packing information storage type is set to "head of GOP" since the frame-packing information piece is contained only in a frame at the head of the playback section. The start PTS is set to "video PTS value (180000 in the example)", which is the PTS at the head of the playback section (A).

A frame-packing information descriptor (B) includes information corresponding to the frame-packing information piece of the 2D playback section (B). Each value of the frame-packing information descriptor (B) is set as provided in the following. The frame storage type is not set, similar as the frame storage type of the frame-packing information. Alternatively, if a frame storage type "2D" is to be defined, "2D" may be set to the frame storage type. Further, the frame-packing information storage type is set to "head of GOP" since the frame-packing information piece is contained only in a frame at the head of the playback section. The start PTS is set to "video PTS value (5580000 in the example)", which is the PTS at the head of the playback section (B).

The frame-packing information descriptor (C) includes information corresponding to the frame-packing information pieces of the Top-and-Bottom playback section (C). Each value of the frame-packing information descriptor (C) is set as provided in the following. The frame storage type is set to "Top-and-Bottom", which is the same as the frame storage type of the corresponding frame-packing information pieces. The frame-packing information storage type is set to "in units of access units" since a frame-packing information piece is contained in each of the video access units in the playback section. The start PTS is set to "video PTS value (10980000 in the example)", which is the PTS at the head of the playback section (C).

This concludes the description on the video format pertaining to the present embodiment.

### (3D Video Playback Device)

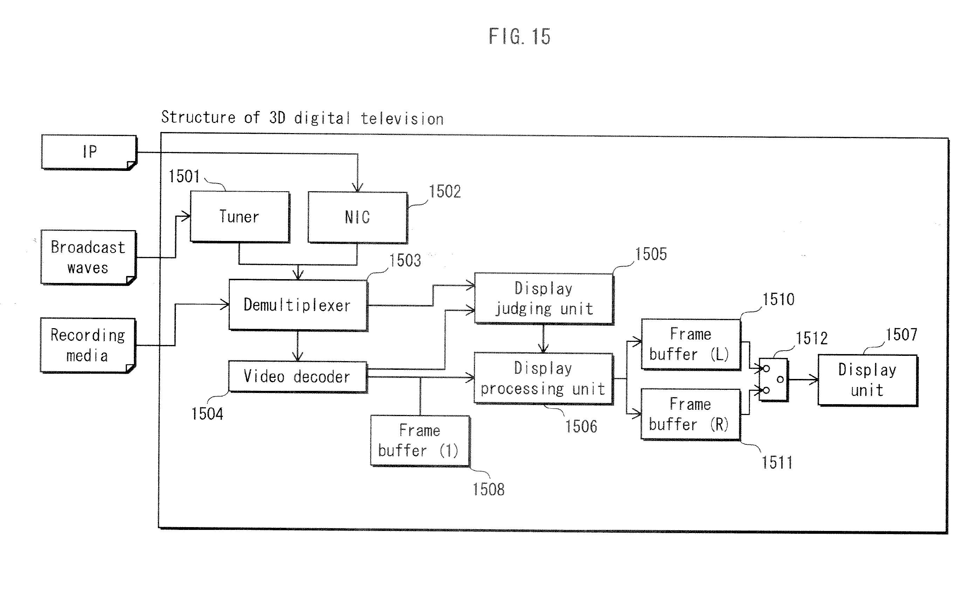

Subsequently, description is provided on the structure of a playback device for playing back 3D video pertaining to the present embodiment with reference to Fig. 15.

The playback device, in specific, is a 3D video display-compatible plasma television, LCD television or the like that receives transport streams from which video streams are extracted. Here, the playback device is a 3D television that uses the alternate-frame sequencing method for 3D viewing with shutter glasses. The playback device is connected to an IP network and another playback device, and also decodes video streams output thereby for display.

As illustrated in Fig. 15, the playback device includes: a tuner 1501; an NIC 1502; a demultiplexer 1503; a video decoding unit 1504; a display judging unit 1505; a display processing unit 1506; a display unit 1507; a frame buffer (1) 1510; a frame buffer (2) 1511; and a switch 1512.

The tuner 1501 receives transport streams in digital broadcasts and demodulates the signals received therefrom.

The NIC 1502 is connected to an IP network and receives transport streams output from external sources.

The demultiplexer 1503 demultiplexes the received transport streams into video streams and other streams such as audio streams, and then outputs the video stream to the video decoder 1504. Also, the demultiplexer extracts system packets, such as a PSI, from the received transport stream, obtains a "frame-packing information descriptor" from a PMT packet, and notifies the display judging unit 1505 and the video decoding unit 1504 of the frame-packing information descriptor so obtained. Also, in addition to the input from the tuner 1501 and the NIC 1502, the demultiplexer 1503 can also read transport streams from a recording medium.

When receiving a video stream from the demultiplexer 1503, the video decoding unit 1504 decodes the received video stream and further, extracts "frame-packing information" from the received video stream. The decoding of video in units of frames is performed by the video decoding unit 1504. Here, when the "frame-packing information storage type" of the frame-packing information descriptor notified from the demultiplexer 1503 indicates "in units of GOPs", the video decoding unit 1504 performs the extraction of "frame-packing information" with respect to only the video access units at the head of the GOPs and skips the rest of the video access units.

The video decoding unit 1504 writes decoded frames to the frame buffer (1) 1508 and outputs the "frame-packing information" to the display judging unit 1506.

The frame buffer (1) 1508 is an area for containing the frames decoded by the video decoding unit 1504.

The display judging unit 1505 determines a display method based on the "frame-packing information descriptor" and the "frame-packing information". More specifically, the display judging unit 1505 determines the storage method applied to the 3D video according to the frame storage type stored in the "frame-packing information descriptor" and the "frame-packing information", and notifies the display processing unit 1506 of the storage method so determined. The notification of the storage method to the display processing unit 1506 is performed at a timing indicated by the "start PTS" of the "frame-packing information descriptor" or a PTS of the video containing the "frame-packing information". The display judging unit 1505 determines the display method in such a manner and notifies the display processing unit 1506 of the display method so determined.

The display processing unit 1506 converts the decoded frame data stored in the frame buffer (1) in accordance with the notification received from the display judging unit 1505, and writes the converted data to a frame buffer (L), a frame buffer (R) and the like. More specifically, when the decoded frames are in the Side-by-Side format, the display processing unit 1506 crops a HalfHD left-view image from the left half of each of the frames and writes the HalfHD left-view images to the frame buffer (L). Similarly, the display processing unit 1506 crops a HalfHD right-view image from a right half of each of the frames and writes the HalfHD right-view images to the frame buffer (R). When the decoded frames are in the Top-and-Bottom format, the display processing unit 1506 crops a HalfHD left-view image from the top half of each of the frames and writes the HalfHD left-view images to the frame buffer (L), and crops a HalfHD right-view image from the bottom half of each of the frames and writes the HalfHD right-view images to the frame buffer (R). When the decoded frames are 2D images, the display processing unit 1506 writes the video stored in the frame buffer (1) to both the frame buffer (L) and the frame buffer (R).

A frame buffer (L) 1510 and a frame buffer (R) 1511 each have an area for storing the frames output from the display processing unit 1506.

The switch 1512 makes a selection of the frame images written to the frame buffer (L) 1510 and the frame buffer (R) 1511, and transfers a frame image so selected to the display unit 1507. More specifically, the switch 1512 performs the selection of images in alternation between the frame buffer (L) 1510 and the frame buffer (R) 1511 according to the frame to be displayed. Thus, the images transferred from the frame buffer (L) 1510 and the frame buffer (R) 1511 are displayed in alternation by the display unit 1507.

The display unit 1507 displays the frames transferred from the switch 1512. Further, the display unit 1507 communicates with the 3D glasses and controls the liquid crystal shutters thereof such that the left side is open when a left-view image is displayed and the right side is open when a right-view image is displayed. Note that the display unit 1507 does not perform the control of the 3D glasses when displaying 2D video.

The concludes the description on the playback device pertaining to the present embodiment.

Note that, apart from the PMT packet, the frame-packing information descriptor may be stored in an SI (Service Information) descriptor including program information and the like, a TS packet header, a PES header and the like.

In addition, although description has been provided in the above that the frame-packing information storage type of the frame-packing information descriptor indicates either "in units of GOPs" or "in units of access units", indication may be made by the frame-packing information storage type of other types as follows: "in units of PES packets", which indicates that frame-packing information is stored in each PES packet; "in units of I-pictures", which indicates that frame-packing information is stored in each I-picture; and "in units of attribute switching", which indicates that a new frame-packing information piece is generated every time a value of the frame-packing information changes.

Further, note that the frame-packing information descriptor may include an identifier indicating whether or not values of the present frame-packing information descriptor differ from a frame-packing information descriptor stored in the previous PMT packet. The playback device, by referring to this identifier and when determining that the values do not differ between the frame-packing information descriptors, is able to skip such processing as the analysis of the frame-packing information descriptor, the notification to the display judging unit 1505, and the processing by the display judging unit 1505.

Additionally, a repeat flag may be stored as the frame-packing information storage type of the frame-packing information descriptor. This is since the playback device can judge that the frame-packing information storage type indicates "in units of GOPs" when the repeat flag of the frame-packing information descriptor indicates a value "1", and that the frame-packing information storage type indicates "in units of access units" when the repeat flag of the frame-packing information descriptor indicates a value "0", for instance.

Note that arrangement may be made such that the frame-packing information storage type of the frame-packing information descriptor can be set separately for each frame storage type. For instance, the frame-packing information storage type may be configured to indicate "in units of GOPs" when the frames are in the Side-by-Side format and to indicate "in units of frames" when the frames are in the Top-and-Bottom format. Similarly, arrangement may be made such that the frame-packing information storage type of the frame-packing information descriptor can be set separately for each of the IDs of the frame-packing information. Although omitted in the description provided with reference to Fig. 1, multiple frame-packing information pieces, each provided with an ID, can be set. In the Frame_packing_arrangement SEI under MPEG-4 AVC, this ID corresponds to Frame_packing_arrangement_id. The frame-packing information storage type may be set separately for each of such IDs. By making such an arrangement, the playback device will not have to analyze the frame-packing information descriptors of the PMT packet every time. That is, the playback device will be able to use the same frame-packing information descriptor continuously when the frame-packing information descriptor has been be analyzed once.

### (Modification of Data Format for Containing 3D Video)

In the following, description is provided on a modification of the data format for containing 3D video pertaining to the present embodiment with reference to the accompanying drawings.

When the playback device performs display switching processing where the video displayed is switched from 3D video to 2D video or from 2D video to 3D video, there are cases where a certain amount of time is required. For instance, in a case where the playback device is connected to a television via an HDMI cable or the like, re-authentication of the HDMI connection may be required for switching between 2D video and 3D video. In such a case, a problem arises where the video is not displayed correctly during the display switching processing. In view of such a problem, playback of contents on a playback apparatus is performed as is expected by the creator of the contents in the case to be described in the following by appropriately controlling the time at which the switching is performed.

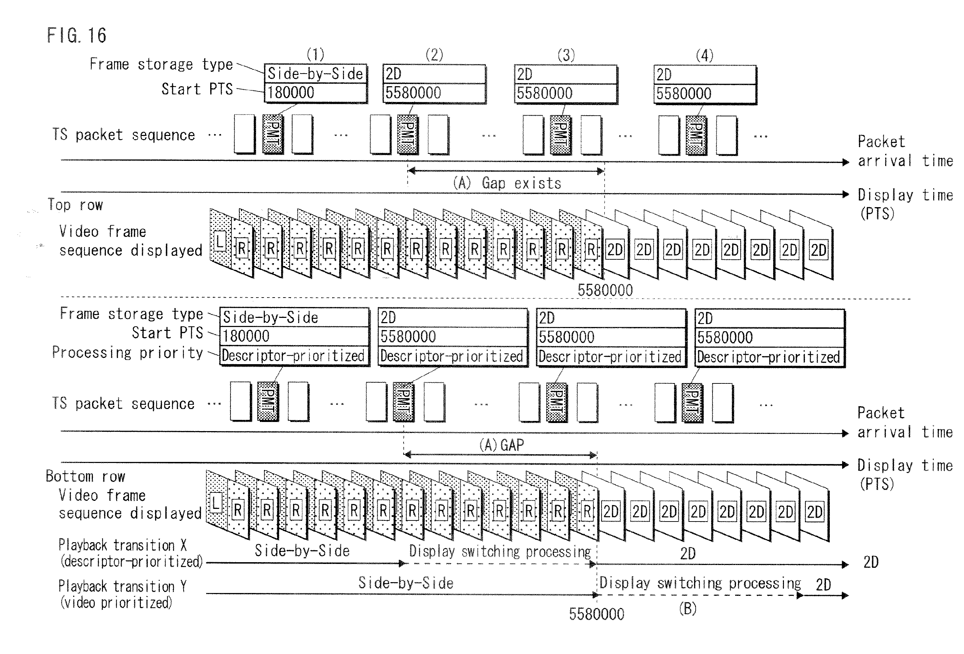

The top row in Fig. 16 illustrates a correlation between a TS packet sequence and a video frame sequence to be played back. The video frame sequence is in a Side-by-Side 3D video playback section until PTS5580000, and following the elapse of the PTS5580000, the video frame sequence enters a 2D video playback section. Configuration of the frame-packing information descriptors included in the PMT packets in the TS packet sequence in this case are illustrated at the top row of Fig. 16 indicated by the symbols (1) to (4). More specifically, (1) is a descriptor indicating a Side-by-Side section, and (2), (3), and (4) are descriptors each indicating a 2D section. Here, as already described in the above, there is a gap of time between the time at which a multiplexed TS packet arrives at a decoder and the time at which the corresponding video is displayed. The gap is illustrated in Fig. 16 indicated by the symbol (A). More specifically, the time at which a notification is made by the descriptor (2) of the frame storage type "2D" is still within the Side-by-Side 3D video playback section in terms of video display time. Therefore, if the playback device refers to the frame-packing information descriptor in the PMT packet and performs display processing according to the descriptor at the point at which the PMT packet arrives, display switching processing is performed during the gap (A). Thus, 3D video cannot be correctly played back during the gap (A).

So as to avoid such a situation, information indicating "processing priority" is provided to the frame-packing information descriptors as illustrated in Fig. 16. More specifically, two types of "processing priority" are prepared and provided to the frame-packing information descriptors, one being "descriptor prioritized" and the other being "video prioritized". The "descriptor prioritized" information indicates that processing of a frame-packing information descriptor of a PMT packet is prioritized, whereas the "video prioritized" information indicates that processing of the frame-packing information contained in the video stream is prioritized. When the "processing priority" indicates "descriptor prioritized", the playback device gives higher priority to the frame-packing information descriptor included in the PMT and performs the display switching processing according to the frame-packing information descriptor. Thus, since the playback device performs the processing when the PMT packet arrives, the display switching processing is performed during the gap (A). The transition between playback states in this case is illustrated as playback transition X in the bottom part of the bottom row in Fig. 16. By performing processing according to the frame-packing information descriptor as indicated by the "descriptor prioritized" information, the end of the Side-by-Side playback section is not correctly played back due to the display switching processing being performed. However, the beginning of 2D playback section is correctly played back.

When the "processing priority" indicates "video prioritized", the playback device gives higher priority to the frame-packing information included in the video and performs the display switching processing according to the frame-packing information. Thus, the playback device does not perform the display switching processing even when the PMT packet has arrived, and the display switching processing is finally performed at the time at which the video stream is to be displayed. In this case, playback of data is correctly performed during the gap (A), and display switching processing is performed during an interval (B) starting from the time PTS5580000, where playback transitions to 2D video. The transition between playback states in this case is illustrated as playback transition Y in the bottom part of the bottom row in Fig. 16. By performing processing according to the frame-packing information as indicated by the "video prioritized" information, the beginning of the 2D playback section is not correctly played back due to the display switching processing being performed. However, the end of the Side-by-Side playback section is correctly played back.

As such, by providing the "processing priority" to the frame-packing information descriptor included in the PMT, the time at which the display switching processing is performed by the playback device can be controlled, in such a manner that the contents creator's intentions are reflected. In the example illustrated in Fig. 16, when the content creator desires to give higher priority to 2D video playback, "processing priority" can be set to "descriptor prioritized", whereas when the content creator desires to give higher priority to playback of Side-by-Side 3D video, "processing priority" can be set to "video prioritized". Note that here, a meaningless image such as a black screen may be contained in the video during the interval in which display switching processing is to be performed in accordance with the "processing priority". In the examples illustrated in Fig. 16, the gap (A) corresponds to such an interval in the case where the "processing priority" is set to "descriptor prioritized", whereas the section (B) corresponds to such an interval in the case where the "processing priority" is set to "video prioritized". By making such an arrangement, occurrence is avoided of an interval during which users are not able to enjoy the contents of the video.

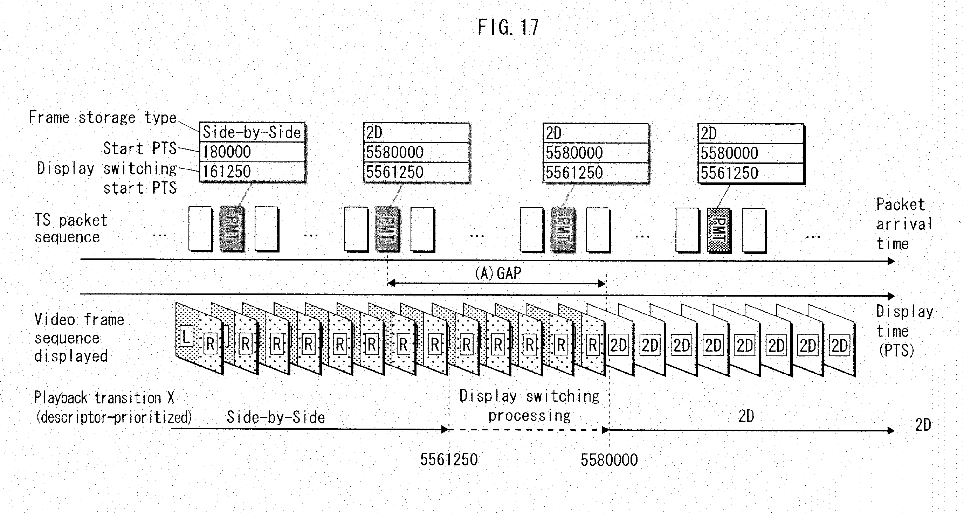

In addition, note that the frame-packing information descriptor may contain a "display switching start time" as illustrated in Fig. 17, rather than the information indicating "processing priority". By making such an arrangement, the time at which display processing is started can be controlled with an increased degree of accuracy.

This concludes the description provided on the modification of the data format for containing 3D video pertaining to the present embodiment.

### (Data Format in a Case Where 3D Video Is Composed of Two Video Streams)

In the following, description is provided, with reference to the accompanying drawings, on a data format in a case where the 3D video pertaining to the present embodiment is composed of two video streams.

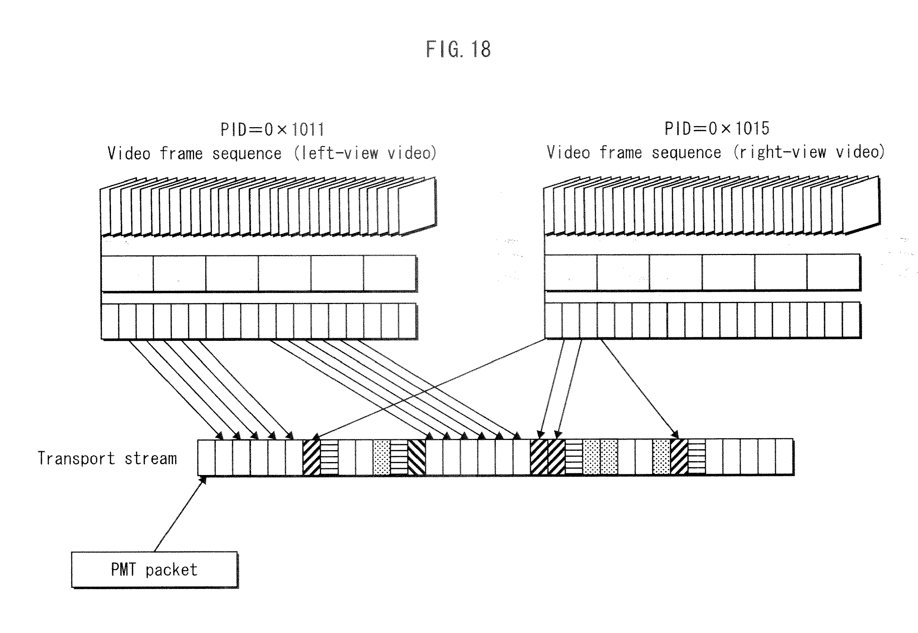

Description has been provided up to this point taking as an example 3D video in the frame compatible format. However, as shown in Fig. 18, left-view video and right-view video may be contained in one transport stream as separate video streams. In such a case, playback of 2D video is performed by using either the left-view or right view video, whereas playback of 3D video is performed by using both the left-view and right-view videos.

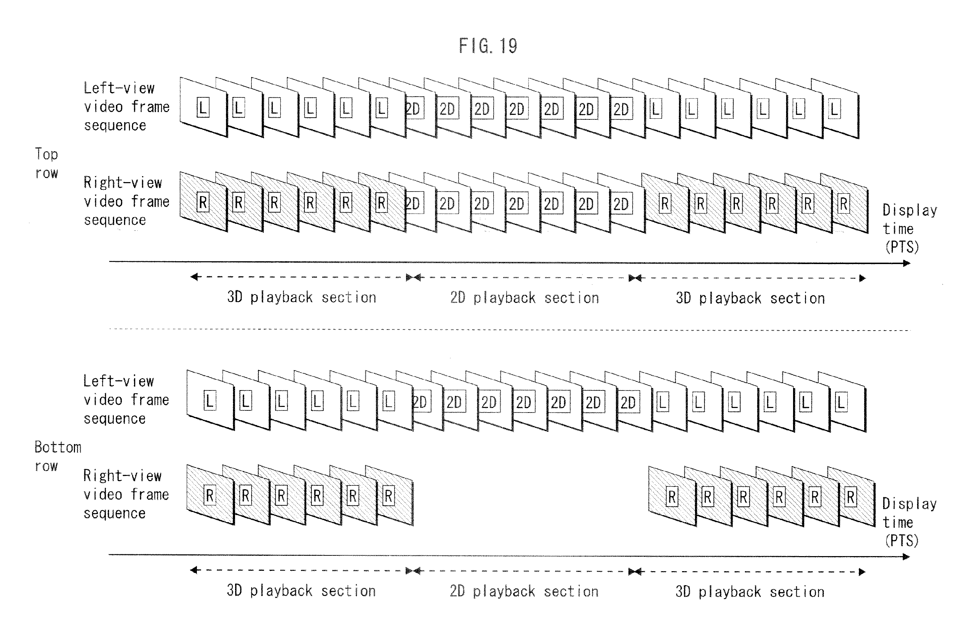

In Fig. 19, frames of the left-view and right-view video streams are illustrated in the order in which they are displayed. Here, the left-view and right-view video streams are those described with reference to Fig. 18. In a case where both a 2D video playback section and a 3D playback section exist as illustrated in the top row of Fig. 19, seamless connection between 3D and 2D video is realized by storing 2D video in both the left-view and right-view video. However, in such a case, data corresponding to either the left or right video frame sequences become redundant during the 2D video playback section. In order to realize display of 2D video in as high a quality as possible, it is preferable that the 2D video be contained in only one of the video frame sequences, whereas no video data is contained in the other video frame sequence as illustrated in the bottom row of Fig. 19. By making such an arrangement, a higher bit rate can be secured for the encoding of 2D video.

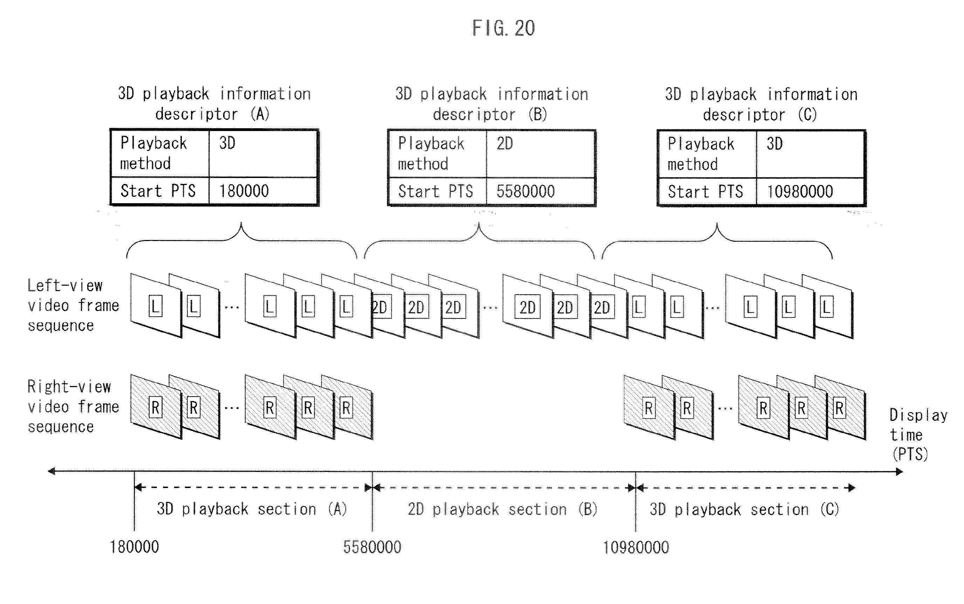

In view of such situations, a 3D playback information descriptor is prepared, as illustrated in Fig. 20. The 3D playback information descriptor distinguishes between 2D playback sections and 3D playback sections in video streams multiplexed into a transport stream. More specifically, the 3D playback information descriptor is contained in the PMT packet. The 3D playback descriptor includes information indicating a playback method and a start PTS. The playback method is an identifier indicating either 2D playback or 3D playback. The start PTS is time information indicating a frame from which a corresponding playback section begins. In the example illustrated in Fig. 20, a 3D playback information descriptor (A) indicates that a 3D playback section starts from PTS 180000, a 3D playback information descriptor (B) indicates that a 2D playback section starts from PTS5580000, and a 3D playback information descriptor (C) indicates that a 3D playback section starts from PTS 10980000. By referring to the information included in the 3D playback information descriptors, the 3D playback device can determine whether a given section is a 3D playback section or a 2D playback section. Accordingly, the 3D playback device is able to decode and display only the left-view video frame sequence during a 2D video playback section, while not containing any data to the right-view video frame sequence. Thus, a higher bit rate can be secured for the encoding of the left-view video frame sequence.

Note that here, in order so as to indicate which video stream is to be played back as 2D video, a specification may be made of a PID of the video to be played back as the 2D video in the 3D playback information descriptor. Further, a video stream to be played back as 2D video and a video stream to be played back as 3D video are respectively referred to as a "base video stream" and an "extended video stream" hereinafter. Further, an arrangement may be made such that a normal type of stream is used as the base video and a special type of stream is used as the extended video, rather than making a specification of a PID in the 3D playback information descriptor.

In addition, the 3D playback information descriptor may be contained in the supplementary data or an extension area of the base video stream. Further, in order so as to enable the playback device to prepare for the display switching processing in advance, the 3D playback information descriptor may be contained in the video stream in a preceding 3D playback section (A) rather than in the corresponding 2D playback section (B).

Note that, in Fig. 20, information in the form of a signal indicating that a video frame will no longer exist may be contained in a video frame immediately preceding the 2D playback section (B), during which the extended video stream does not exist. For instance, the signal may be "EndOfSequence". When receiving the signal while performing decoding, the playback device is notified that the extended video stream does not exist beyond this point, and accordingly, is able to transition to 2D video playback.

Note that, in the 2D playback section, an extended video stream may also be prepared in addition to the base video stream containing the 2D video. In such a case, the extended video stream is to be configured to contain a low bit-rate image, such as a black screen, for displaying messages prompting the user to perform 2D playback and further, the 3D playback information descriptor may be contained in the supplementary data or the extension area of the extended video stream. In such a case, the playback device refers to the 3D playback information descriptor contained in the extended video stream. When the playback device is capable of judging that the descriptor indicates 2D playback, 2D video is played back using only the base video stream. On the other hand, in a case where playback device is incapable of processing the 3D playback information descriptor, a message prompting the user to perform 2D playback is displayed, and accordingly, the user is urged to playback 2D video. Such an arrangement is advantageous since the bit rate of the extended video stream in the 2D playback section is suppressed to a low level and thus, a higher bit rate can be allocated to the base video.

Note that, in a case where the 3D playback information descriptor is contained in the PMT packet, there is a gap of time between (i) the time at which the PMT packet arrives at the playback device and (ii) the time at which the corresponding video stream is displayed. So as to avoid the occurrence of an interval during which users are not able to enjoy the contents of the video stream, a meaningless image such as a black screen may be stored in a section of the video stream corresponding to the gap.

Further, when the playback method of the 3D playback information descriptor indicates 2D, the frames of the base video stream during the corresponding 2D playback section may be duplicated such that the format (frame rate, and etc.) is similar to that in the playback of 3D video. When making such an arrangement, both of the duplicated 2D frames are played back and the re-authentication of the HDMI connection is not required.

When a method is applied of transferring 3D video by using two video streams as illustrated in Fig. 18, a descriptor of a PMT packet stores information indicating which video streams form a pair, and thereby compose the 3D video in combination. For instance, in the example illustrated in Fig. 18, the PID of the left-view video is 0×1011, and the PID of the right-view video is 0×1015. In this case, the descriptor of the PMT packet stores information indicating: left-view video PID = 0×1011 and right-view video PID = 0×1015. Alternatively, a stream descriptor corresponding to a given video stream may contain a PID of a video stream of the opposite perspective. For instance, in the example illustrated in Fig. 18, the stream descriptor corresponding to the left-view video stream contains 0×1015, which is the PID of the right-view video stream, and the stream descriptor corresponding to the right-view video stream contains 0×1011, which is the PID of the left-view video stream. Here, note that a descriptor provided to a given video stream may contain a PID of a corresponding video stream which composes a pair with the video stream. Such a descriptor similarly functions as a descriptor for identifying left-view and right-view video streams composing a pair. Further, note that, the hierarchy descriptor defined under the MPEG 2 system standard may similarly be used as a descriptor for identifying left-view and right-view video streams composing a pair. When applying the hierarchy descriptor, a new hierarchy type may be prepared exclusively for this purpose.

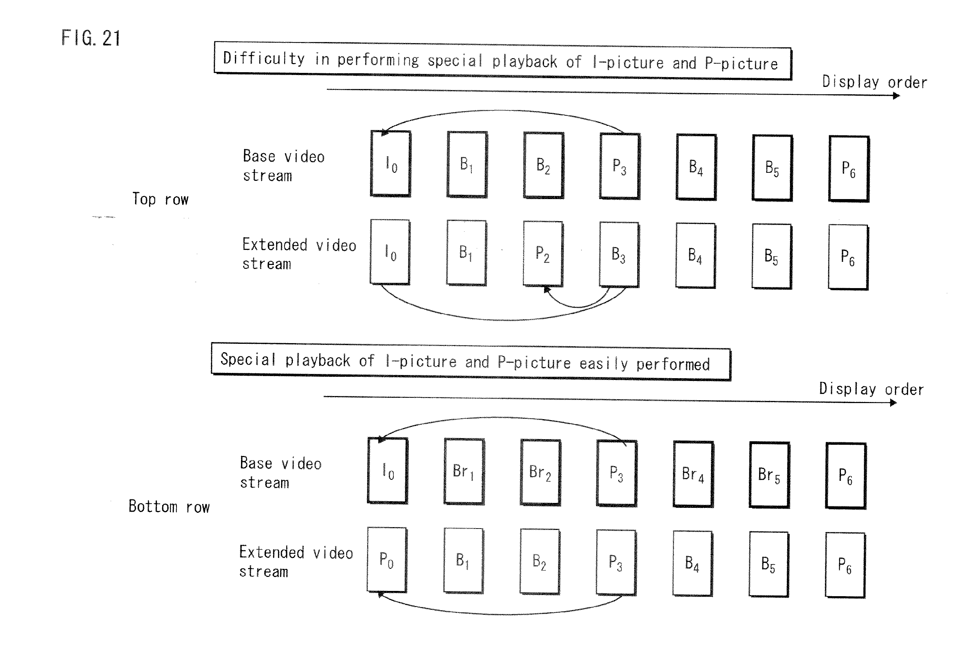

When a method is applied of transferring 3D video by using two video streams as illustrated in Fig. 18, restrictions may be imposed on the picture types as illustrated in the bottom row of Fig. 21 so as to improve the efficiency of special playback during 3D playback such as fast-forwarding. More specifically, when a video access unit of the base video stream is an I-picture, an arrangement is made such that a video access unit of the extended video stream having the same PTS is also an I-picture. Similarly, when a video access unit of the base video stream is a P-picture, an arrangement is made such that a video access unit of the extended video stream having the same PTS is also a P-picture. The top row of Fig. 21 illustrates a case where such restrictions are not imposed and the playback device performs special playback by selecting an I-picture and a P-picture. Here, when a video access unit of the base video stream is a P-picture (P₃), a video access unit of the extended video stream at the same time point is a B-picture (B₃). Thus, in this case, the playback device is required to decode a preceding P-picture (P₂) of the extended video stream in addition to the B-picture (B₃), and thus, an increase is brought about in processing load. By imposing restrictions as illustrated in the bottom row of Fig. 21, the playback device is only required to decode a picture of the extended video stream at the corresponding time point, and thus, the processing load is comparatively low compared to the case illustrated in the top row of Fig. 21.

When a method is applied of transferring 3D video by using two video streams as illustrated in Fig. 18, restrictions may be imposed such that attributes such as frame rate, resolution, and aspect ratio, are common between the two video streams. By imposing such restrictions, processing of the video streams is facilitated since analysis is required of attribute information of only one of the two video streams.

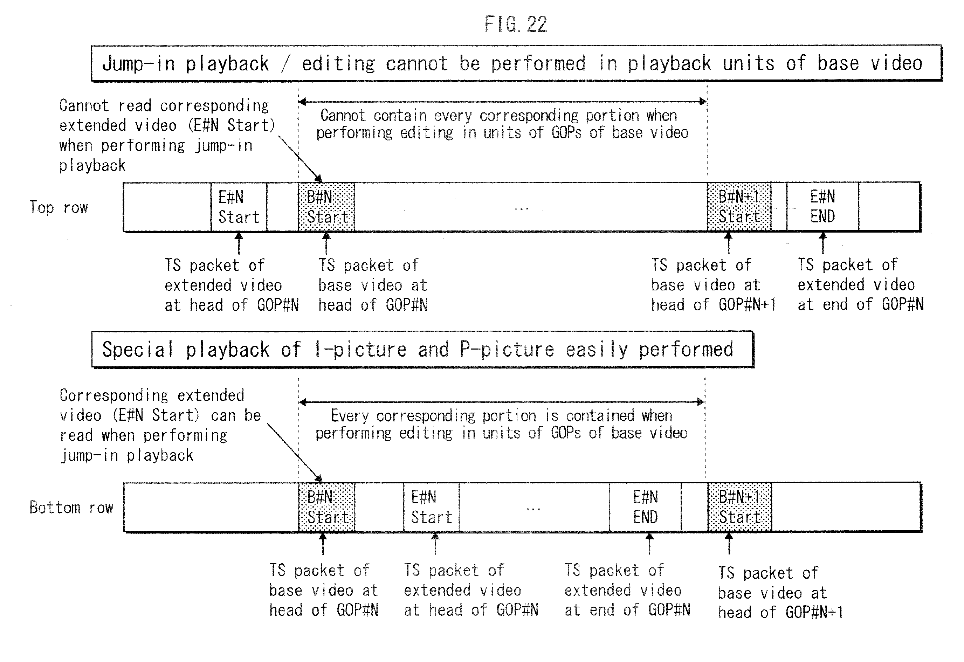

When a method is applied of transferring 3D video by using two video streams as illustrated in Fig. 18, restrictions may be imposed on the multiplexing performed with respect to the two video streams as illustrated in Fig. 22. In the examples illustrated in Fig. 22, B#NStart is a TS packet of the base video at the head of GOP#N, and E#NStart is a TS packet of the extended video at the head of GOP#N. Similarly, in Fig. 22, B#N+1Start is a TS packet of the base video at the head of GOP#N+1, and E#NEnd is a TS packet of the extended video at the end of GOP#N. In the case illustrated in the top row of Fig. 22, when attempting to start playback from B#NStart in order to perform jump-in playback in playback units of the base video, the playback device cannot read a packet of the extended video corresponding to B#NStart. Further, in a case where editing is performed in units of GOPs of the base video, the extended video having the same playback time as the base video cannot be contained within the corresponding range of GOPs of the base video. In such cases, it is required for the playback device and an editing device to check the GOP structure of not only the base video but also the extended video and thus, a higher processing load imposed is. In view of such problematic situations, an arrangement may be made where a TS packet of the base video at the head of GOP#N is arranged preceding a TS packet of the extended video at the head of GOP#N, and further, a TS packet of the base video at the head of GOP#N+1 is arranged following a TS packet of the extended video at the end of GOP#N. By making such an arrangement, jump-in playback and editing can be performed in playback units of the base video.

Further, although description has been made in the above with reference to Fig. 18 that the extended video stream is either the left-view video or the right-view video, the extended video stream may also be a depth map visualizing a depth of the 2D video. In addition, when the extended video stream is a depth map, a specification of a 3D playback method may be made with the use of a descriptor.

### (Data Creation Device)

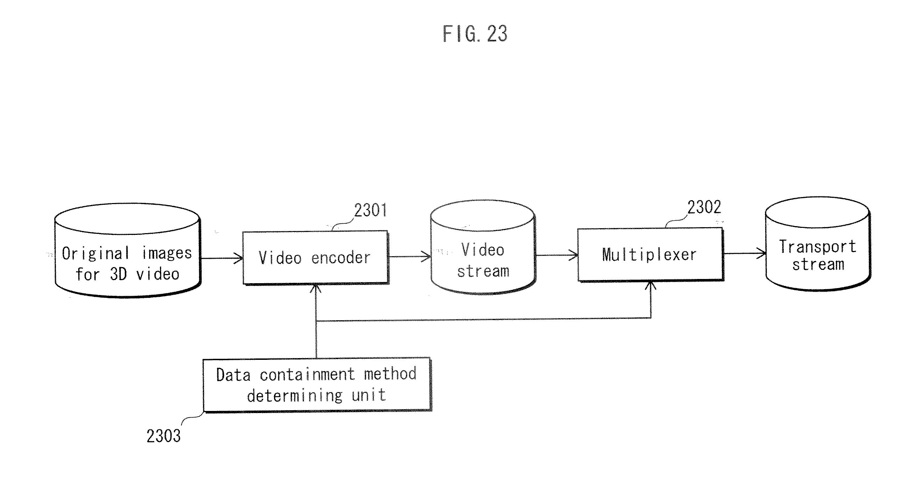

In the following, description is provided on a data creation device and a data creation method pertaining to the present embodiment with reference to Fig. 23.

The data creation device includes: a video encoder 2301, a multiplexer 2302, and a data containment method determining unit 2303.

The data containment method determining unit 2303 specifies the data format of a transport stream to be created. For instance, when creating a transport stream having a video format as illustrated in Fig. 14, the section from PTS180000 to PTS5580000 is specified as the Side-by-Side playback section, the section from PTS5580000 to PTS10980000 is specified as the 2D playback section, and the section following PTS10980000 is specified as the Top-and-Bottom playback section. The data containment method determining unit 2303 further transmits a specification of time information and frame-packing information storage type to the video encoder 2301 in addition to the information regarding such playback methods.

The video encoder 2301 encodes picture images such as left-view and right-view uncompressed bitmap images and the like according to a compression method such as MPEG-4 AVC or MPEG 2 and according to instructions provided from the data containment method determining unit 2303. When the data containment method determining unit 2303 makes an instruction for "Side-by-Side format 3D video", then the left-view and right-view Full HD images are each down-converted to Half HD and combined so that each side forms half of a single frame in the Side-by-Side format, whereupon the frames are compression-coded. When the data containment method determining unit 2303 makes an instruction for "2D video", then compression-coding is performed of a Full HD 2D image. When the data containment method determining unit 2303 makes an instruction for "Top-and-Bottom format 3D video", then the left-view and right-view Full HD images are each down-converted to Half HD and combined so that each side forms half of a single frame in the Side-by-Side format, whereupon the frames are compression-coded. Then, the video encoder 2301 contains frame-packing information to the supplementary data according to the video formats described in the present embodiment. Here, the containment method applied is in accordance with the frame-packing information storage type specified by the data containment method determining unit 2303. The compressed stream is output as a video stream.

The multiplexer 2302 multiplexes the video streams output by the video encoder 2301 and other streams such as audio and subtitle streams according to instructions from the data containment method determining unit 2303 to create transport streams for output. If the data containment method determining unit 2303 makes an instruction for "Side-by-Side format 3D video", the multiplexer 2302, at the same time as performing multiplexing to create a transport stream, contains the "frame-packing information descriptor" to a PMT packet of the transport stream according to the video format as described in the present embodiment, and thereby outputs the transport stream.

This concludes the description provided on the data creation device and the data creation method pertaining to the present embodiment.

### (Embodiment 2)

In embodiment 2, explanation is provided of specific examples of implementation of the descriptors, description of which has been provided in the above.

3D programs are broadcasted by broadcast stations supplying a single transport stream to television display devices located in each household. More specifically, the transport stream as referred to here is obtained by multiplexing multiple video streams. Here, various patterns exist of the combination of video streams to be contained in a single transport stream. The descriptors pertaining to the present embodiment realize 2D/3D compatible playback and seamless transition between 2D and 3D playback of transport streams even when the combination of video streams contained in the transport stream vary among various patterns.

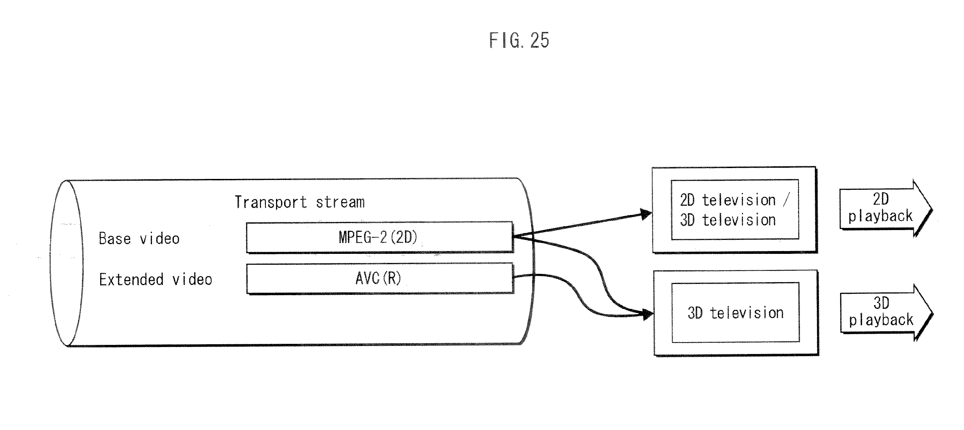

Fig. 25 illustrates a structure of a transport stream (2D/L + R) containing right-view (R) video as well as video that is used in 2D playback and that is also used as left-view (L) video in 3D playback. In the example illustrated in Fig. 25, the transport stream contains a video stream (base video stream) that is used for 2D playback and that is also used as left-view video in 3D playback and a right-view video stream (extended video stream #1).

The stream type of each of the base video stream and the extended video stream is uniquely defined in the PMT. In addition, the base video stream is compression-coded under MPEG 2, whereas the extended video stream is compression-coded under AVC.

The 2D/L video stream is used for 2D playback on 2D televisions and for 2D mode playback on 3D televisions. On the other hand, the R video stream is used, along with the 2D/L video stream, for 3D mode playback on 3D televisions.

Apart from the 2D/L + R transport stream structure as described in the above, another transport stream structure (2D + L + R) is possible where a transport stream separately contains left-view video (L) and right-view video (R) in addition to 2D video.

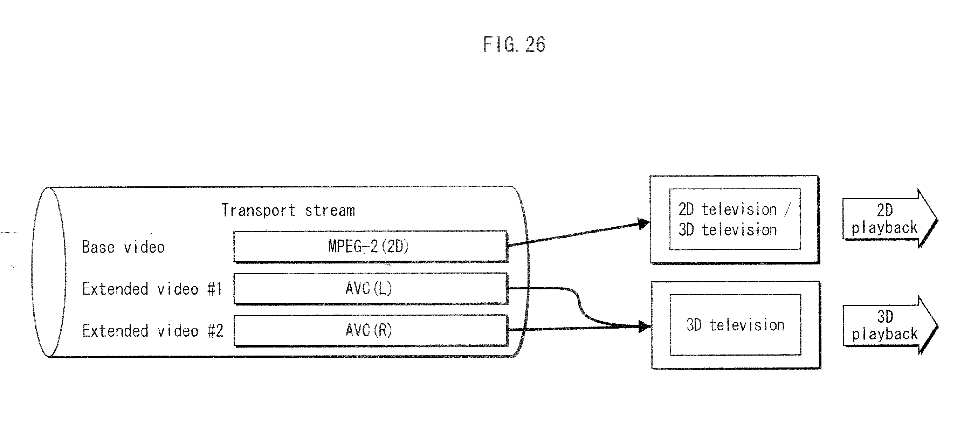

Fig. 26 illustrates the structure of a 2D + L + R transport stream. In the example illustrated in Fig. 26, the transport stream contains: a 2D video stream (base video stream); a left-view video stream (extended video stream #1); and a right-view video stream (extended video stream #2). Here, the base video stream is compression-coded under MPEG 2, whereas the extended video streams are compression-coded under AVC.

The 2D video stream is used for 2D playback on 2D televisions and for 2D mode playback on 3D televisions. On the other hand, the left-view video stream and the right-view video stream are simultaneously used for 3D mode playback on 3D televisions.

As such, transport streams of various stream structures are received by playback devices. Under such a situation, so as to enable playback devices to specify video streams corresponding to 2D and 3D video, and to perform 2D/3D compatible playback and seamless transition between 2D playback and 3D playback, the descriptors as described in the following is contained in the transport stream in the present embodiment.

The descriptors include: a 3D_system_info_descriptor, which makes a notification of 3D method; a 3D_service_info_descriptor, which is supplementary information for realizing 3D playback; and a 3D_combi_info_descriptor, which indicates the correlation between video streams used for 2D and 3D playback.

In the following, description is provided on the specific details of the three descriptors described above. First, explanation is provided of the 3D_system_info_descriptor.

The 3D_system_info_descriptor is contained in a descriptor field (program loop), which follows a program information length field (program_info_length) in the PMT packet. More specifically, the 3D_system_info_descriptor is contained in one of the descriptors #1-#N in the illustration in Fig. 10.

The 3D_system_info_descriptor specifies the 3D method supported by the transport stream. In specific, the 3D_system_info_descriptor indicates one playback method among: 2D playback; 3D playback according to the frame compatible method; and 3D playback according to the service compatible method. Further, when indicating 3D playback according to the frame compatible method or 3D playback according to the service compatible method, the 3D_system_info_descriptor indicates whether or not one video stream, among the video streams multiplexed, is commonly used for both 2D and 3D playback.

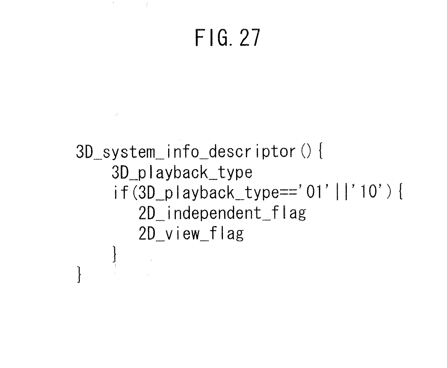

Fig. 27 illustrates a configuration of the 3D_system_info_descriptor.

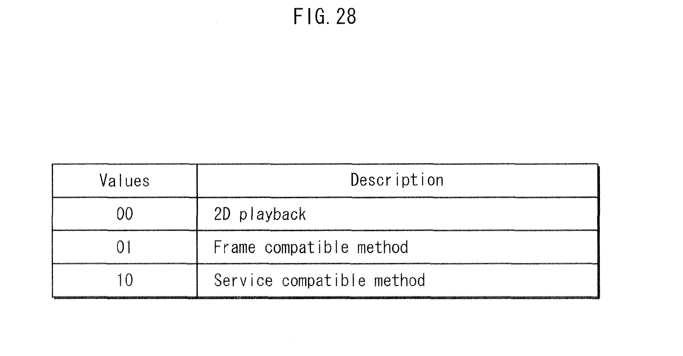

A "3D_playback_type" identifier indicates the playback method supported by the transport stream. Fig. 28 illustrates values set to the "3D_playback_type" identifier. As illustrated in Fig. 28, the values "0", "01", and "10" set to the "3D_playback_type" identifier respectively indicate that the transport stream supports 2D playback, 3D playback according to the frame compatible method, and 3D playback according to the service compatible method. When the transport stream has the 2D + L + R structure or the 2D/L + R structure, the value "10" is set to the "3D_playback_type" identifier.

As such, playback devices are able to identify the playback method supported by the transport stream by referring to the "3D_playback_type" identifier.

A "2D_independent_flag" identifier indicates whether or not one video stream, among the video streams contained in the transport stream, is commonly used for both 2D and 3D playback. The value "0" set to the "2D_independent_flag" identifier indicates that one video stream, among the video streams contained in the transport stream, is commonly used for both 2D and 3D playback. The value "1" set to the "2D_independent_flag" identifier indicates that different video streams are used for 2D playback and 3D playback. For instance, when the transport stream has the 2D/L + R structure, the value "0" is set to the "2D_independent_flag" identifier. On the other hand, when the transport stream has the 2D + L + R structure, the value "1" is set to the "2D_independent_flag" identifier.

As such, playback devices are able to identify whether or not a video stream used for 2D playback is also used for 3D playback by referring to the "2D_independent_flag" identifier, in cases where the transport stream supports 3D playback according to the frame compatible method or the service compatible method (in cases where the values "01" or "10" are set to the "3D_playback_type" identifier).

A "2D_view_flag" identifier indicates which of the video streams composing the 3D video is to be used in 2D playback. For instance, when a frame compatible video stream composes the 3D video, the "2D_view_flag" identifier indicates which of the left-view images and the right-view images are to be used for 2D playback. When service compatible video streams compose the 3D video, the "2D_view_flag" identifier indicates which of the base video stream and the extended video stream is to be used for 2D playback.

This concludes the explanation of the 3D_system_info_descriptor. Subsequently, explanation is provided of the 3D_service_info_descriptor.

The 3D_service_info_descriptor is contained in a descriptor field (ES loop), which follows an ES information length field (ES_info_length) in the PMT packet. More specifically, 3D_service_info_descriptors are contained in the stream descriptors #1-#N in the illustration in Fig. 10.

The 3D_service_info_descriptors each indicate supplementary information for realizing 3D playback. More specifically, the 3D_service_info_descriptors each indicate whether a corresponding video stream is left-view video or right-view video. Here, it should be noted that the 3D_service_info_descriptor is not contained with respect to a video stream which is used only for 2D playback. This is since such a video stream is not used for 3D playback, and thus, the 3D_service_info_descriptor is unnecessary.

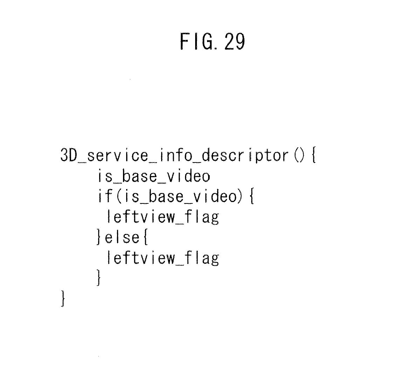

Fig. 29 illustrates a configuration of the 3D_service_info_descriptor.

An "is_base_video" identifier indicates whether the corresponding video stream is a base video stream or an extended video stream. The value "1" set to the "is_base_video" identifier indicates that the video stream is a base video stream. Contrariwise, the value "0" set to the "is_base_video" identifier indicates that the video stream is an extended video stream.

A "leftview_flag" identifier indicates whether the corresponding video stream is a left-view video or a right-view video. The value "1" set to the "leftview_flag" identifier indicates that the video stream is a left-view video. The value "0" set to the "leftview_flag" identifier indicates that the video stream is a right-view video.

As such, playback devices are able to determine whether a video stream is to be output as a left-view video or a right-view video when performing displaying thereof on a television as 3D video by referring to the "leftview_flag" identifier. Here, note that the "leftview_flag" identifier is contained in both cases of when the corresponding video stream is a base video stream and when the corresponding video stream is an extended video stream.

This concludes the explanation of the 3D_service_info_descriptor. In the following, explanation is provided of the 3D_combi_info_descriptor.

The 3D_combi_info_descriptor is contained in a descriptor field (program loop), which follows a program information length field (program_info_length) in the PMT packet. More specifically, the 3D_combi_info_descriptor is contained in one of the descriptors #1-#N in the illustration in Fig. 10.

The 3D_combi_info_descriptor indicates the correlation between video streams for 2D playback and 3D playback. In specific, the 3D_combi_info_descriptor indicates PIDs of video streams composing the transport stream.

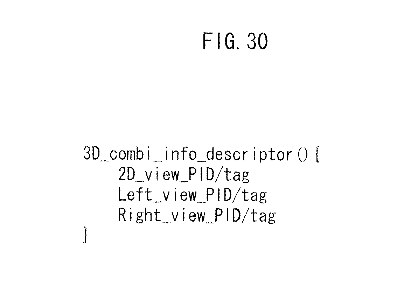

Fig. 30 illustrates a configuration of the 3D_combi_info_descriptor.

"2D_view_PID/tag" indicates a PID of a video stream to be used in 2D playback.

"Left_view_PID/tag" indicates a PID of a left-view video stream.

"Right_view_PID/tag" indicates a PID of a right-view video stream.

Playback devices are able to specify a pair of video streams to be used for 3D playback and a video stream to be used for 2D playback by referring to the 3D_combi_info_descriptor. Since this single descriptor includes description of packet identifiers to be used in performing demultiplexing for both the 2D and 3D modes, playback devices are able to switch between video streams to be demultiplexed for each of the 2D and 3D modes quickly, and thereby perform seamless transition between 2D and 3D playback.

This concludes the explanation of the descriptors when the transport stream has the 2D + L + R structure or the 2D/L + R structure.

In the following, explanation is provided of details of descriptors used when the transport stream has a structure (2D + Side-by-Side) containing a Side-by-Side format video in addition to 2D video.

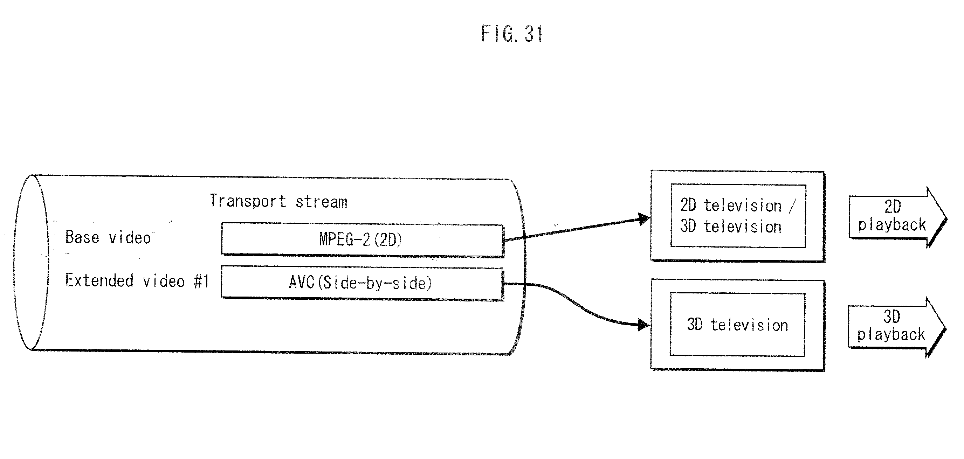

Fig. 31 illustrates a configuration of a 2D + Side-by-Side transport stream. In the example illustrated in Fig. 31, the transport stream contains: a 2D video stream (base video stream); and a Side-by-Side video stream (extended video stream #1). Here, the base video stream is compression-coded under MPEG 2, whereas the extended video stream is compression-coded under AVC.

The following descriptors, which are similar to those contained in the 2D + L + R transport stream, are contained in the 2D + Side-by-Side transport stream: the 3D_system_info_descriptor, which makes a notification of 3D method; the 3D_service_info_descriptor, which is supplementary information for realizing 3D playback; and the 3D_combi_info_descriptor, which indicates the correlation between video streams used for 2D and 3D playback.

2D and 3D playback are performed by referring to such descriptors. 2D playback on 2D televisions and 2D mode playback on 3D televisions are performed by using the 2D base video stream. On the other hand, 3D mode playback on 3D televisions is performed by using the extended video stream #1 in the Side-by-Side format and by similarly referring to such descriptors.

In the following, description concerning the 3D_system_info_descriptor is omitted, since the configuration thereof is similar to the case of the 2D + L + R stream as illustrated in Fig. 27. Playback devices are able to identify the playback method supported by the transport stream by referring to the 3D_system_info_descriptor.

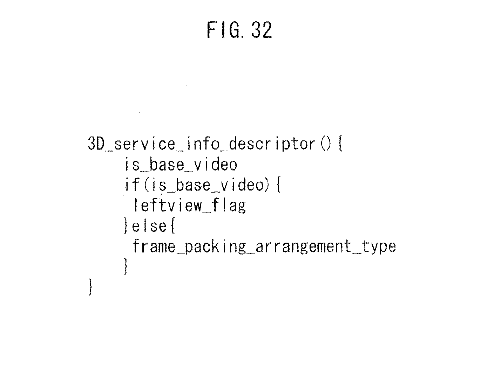

Fig. 32 illustrates a configuration of the 3D_service_info_descriptor. In addition to the identifiers provided thereto when the transport stream is a 2D + L + R transport stream as illustrated in Fig. 29, a new identifier, namely, a "frame_packing_arrangement_type" identifier is provided to the 3D_service_info_descriptor.

The "frame_packing_arrangement_type" identifier indicates whether or not the corresponding video stream is a Side-by-Side video stream. The value "1" set to the "frame_packing_arrangement_type" identifier indicates that the video stream is a Side-by-Side video stream. Contrariwise, the value "0" set to the "frame_packing_arrangement_type" identifier indicates that the video stream is a Top-and-Bottom video stream.

Playback devices are able to specify whether or not the extended video stream is a Side-by-Side video stream and thereby perform 3D playback in accordance with the storage format applied by referring to the "frame_packing_arrangement_type" identifier.

In the explanation provided in the above, values are set to the "frame_packing_arrangement_type" identifier corresponding to the Side-by-Side format and the Top-and-Bottom format. However, it should be noted here that other values corresponding to the Line-by-Line format and the Checkerboard format may also be set to "frame_packing_arrangement_type" identifier. In a frame of a Line-by-Line video stream, a left-view image and a right-view image are respectively interleaved in the odd number lines and the even number lines. Further, in a frame of a Checkerboard video stream, a left-view image and a right-view image are synthesized and thereby contained in alternation in the vertical and horizontal directions, forming a pattern similar to a checkerboard pattern.

In addition, it should be noted that the 3D_service_info_descriptor is not contained with respect to a video stream which is used only for 2D playback, since such a video stream is not used for 3D playback.

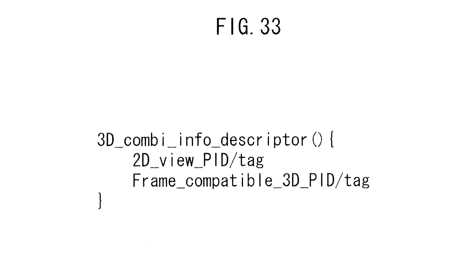

Fig. 33 illustrates a configuration of the 3D_combi_info_descriptor.

"2D_view_PID/tag" indicates a PID of a video stream to be used in 2D playback.

"Frame_compatible_3D_PID/tag" indicates a PID of a frame compatible video stream.

Playback devices are able to specify a frame compatible video stream to be used for 3D playback and a video stream to be used for 2D playback by referring to the 3D_combi_info_descriptor. As such, seamless transition between 2D and 3D playback is realized.

This concludes the explanation of the descriptors when the transport stream has the 2D + Side-by-Side structure.

In the following explanation is provided of details of the descriptors when the transport stream has a structure (2D + MVC) containing two videos (a base view video stream and a dependent view stream) compression-coded under MVC, in addition to video used only for 2D playback.

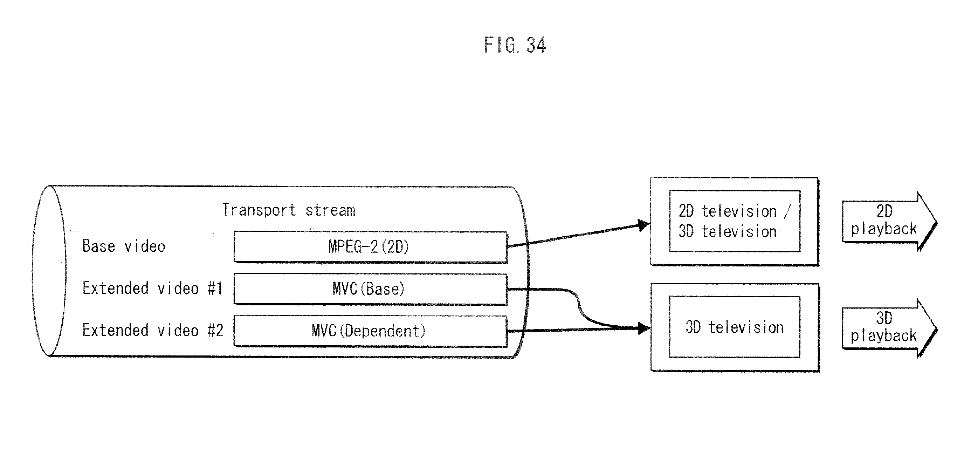

Fig. 34 illustrates the structure of a 2D + MVC transport stream. In the example illustrated in Fig. 34, the transport stream contains a 2D video stream (base video stream), an MVC base view stream (extended video stream #1), and an MVC dependent view stream (extended video stream #2). Here, the base video stream is compression-coded under MPEG 2, whereas the extended video streams #1 and #2 are compression-coded under MVC.

The following descriptors, which are similar to those contained in the 2D + L + R transport stream, are contained in the 2D + MVC transport stream: the 3D_system_info_descriptor, which makes a notification of 3D method; the 3D_service_info_descriptor, which is supplementary information for realizing 3D playback; and the 3D_combi_info_descriptor, which indicates the correlation between video streams used for 2D and 3D playback.

Playback devices such as televisions perform 2D and 3D playback by referring to such descriptors. More specifically, 2D playback on 2D televisions and 2D mode playback on 3D televisions are performed by using the 2D base video stream. On the other hand, the extended video stream #1 and the extended video stream #2 compression-coded under MVC are simultaneously used for 3D mode playback on 3D televisions.

In the following, description concerning the 3D_system_info_descriptor and the 3D_service_info_descriptors is omitted, since the configuration thereof is similar to the case of the 2D + L + R stream as illustrated in Figs. 27 and 29. In addition, it should be noted that the 3D_service_info_descriptor is not contained with respect to a video stream which is used only for 2D playback, similar as in the case of the 2D + L + R stream.

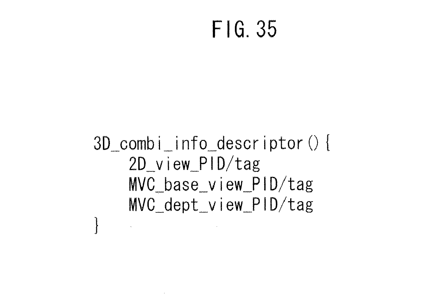

Fig. 35 illustrates a configuration of the 3D_combi_info_descriptor.

"2D_view_PID/tag" indicates a PID of a video stream to be used in 2D playback.

"MVC_base_view_PID/tag" indicates a PID of the MVC base view stream.

"MVC_dept_view_PID/tag" indicates a PID of the MVC dependent view stream.

Playback devices are able to specify a pair of MVC video streams to be used for 3D playback and a video stream to be used for 2D playback by referring to the 3D_combi_info_descriptor. As such, seamless transition between 2D and 3D playback is realized.

This concludes the explanation of the descriptors when the transport stream has the 2D + MVC structure.

In the following explanation is provided of details of the descriptors when the transport stream has a structure (2D + R1 + R2) containing multiple R videos each of a different perspective, in addition to video that is used for 2D playback and that is also used as the L video in 3D playback.

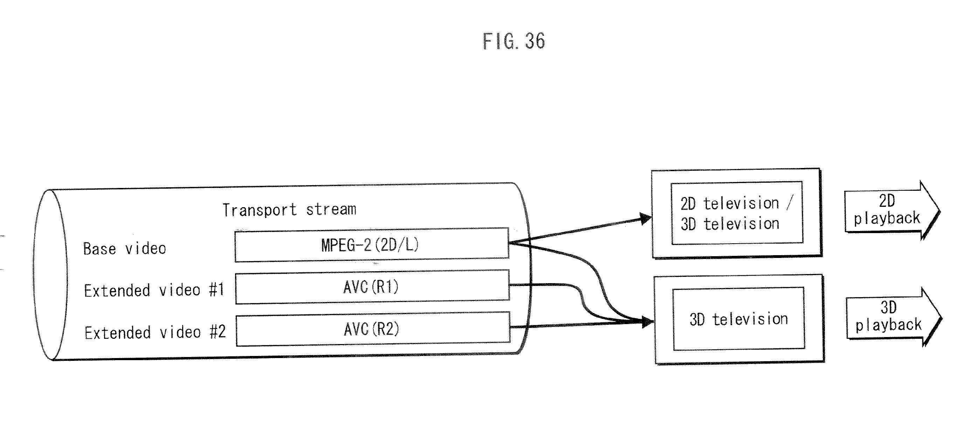

Fig. 36 illustrates the structure of a 2D + R1 + R2 transport stream. In the example illustrated in Fig. 36, the transport stream contains a video stream that is used for 2D playback and that is also used as the L video in 3D playback (base video stream), a first R video stream (extended video stream #1), and a second R video stream (extended video stream #2). Here, the base video stream is compression-coded under MPEG 2, whereas the extended video streams #1 and #2 are compression-coded under AVC.

The following descriptors are contained in the 2D + R1 + R2 transport stream: the 3D_system_info_descriptor, which makes a notification of 3D method; the 3D_service_info_descriptor, which is supplementary information for realizing 3D playback; and the 3D_combi_info_descriptor, which indicates the correlation between video streams used for 2D and 3D playback.

Playback devices such as televisions perform 2D and 3D playback by referring to such descriptors. More specifically, 2D playback on 2D televisions and 2D mode playback on 3D televisions are performed by using the base video stream. On the other hand, the base video stream and the extended video stream #1, or the base video stream and the extended video stream #2 are simultaneously used for 3D mode playback on 3D televisions.

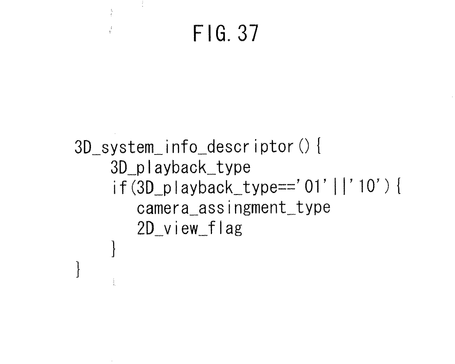

Fig. 37 illustrates a configuration of the 3D_system_info_descriptor. The 3D_system_info_descriptor contained in the 2D + R1 + R2 transport stream includes a "camera_assignment_type" identifier instead of the "2D_independent_flag" identifier included in the case of the 2D + L + R stream as illustrated in Fig. 29.

The "camera_assignment_type" identifier indicates a camera assignment type of the video streams contained in the transport stream. The value "1" set to the "camera_assignment_type" identifier indicates that the transport stream is composed of video streams of a center camera perspective (C). The value "2" set to the "camera_assignment_type" identifier indicates that the transport stream is composed of video streams of a left camera perspective (L) and a right camera perspective (R). The value "3" set to the "camera_assignment_type" identifier indicates that the transport stream is composed of video streams of a center camera perspective (C), a left camera perspective (L), and a right camera perspective (R). The value "4" set to the "camera_assignment_type" identifier indicates that the transport stream is composed of video streams of a left camera perspective (L), a first right camera perspective (R1), and a second right camera perspective (R2).

Playback devices are able to identify the camera assignment of the video streams composing the transport stream by referring to the "camera_assignment_type" identifier.

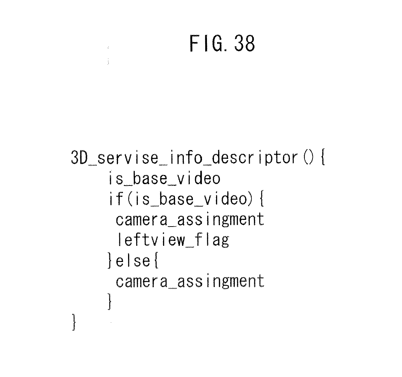

Fig. 38 illustrates the structure of the 3D_service_info_descriptor. The 3D_service_info_descriptor contained in the 2D + R1 + R2 transport stream additionally includes a "camera_assignment" identifier compared to the case of the 2D + L + R stream as illustrated in Fig. 31.

The "camera_assignment" identifier indicates information concerning the position of the camera in the corresponding video stream. Such camera positions include: "left eye"; "center"; and "right eye".

Playback devices are able to identify a camera position of the corresponding video stream by referring to the "camera_assignment" identifier.

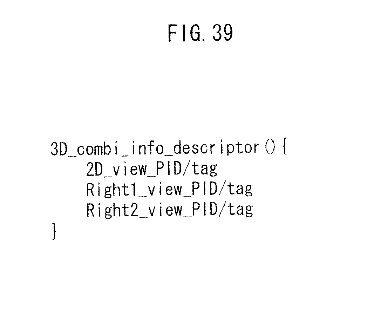

Fig. 39 illustrates a configuration of the 3D_combi_info_descriptor.

"2D_view_PID/tag" indicates a PID of a video stream that is to be used in 2D playback and that is also to be used as the L video in 3D playback.

"Right_view_PID/tag" indicates a PID of the first R video stream.

"Right_view_PID/tag" indicates a PID of the second R video stream.

Playback devices are able to specify a video stream that is used for 2D playback and that is also used as the L video in 3D playback, and each one of multiple R video streams by referring to the 3D_combi_info_descriptor. As such, seamless transition between 2D and 3D playback is realized.

This concludes the explanation of the descriptors when the transport stream has the 2D + R1 + R2 structure.

Up to this point, description has been provided on various possible combinations of video streams contained in the transport stream. By containing the above-described descriptors in the transport stream, transport streams can contain various combinations of video streams. Further, playback devices are able to specify the combination of video streams contained in the transport stream by referring to such descriptors, and hence, seamless transition between 2D and 3D playback is realized.

In the description provided in the above concerning the combinations of video streams contained in the transport stream, description has been provided on a case where extended video streams compression-coded under AVC are contained in the transport stream. However, the present embodiment is not limited to this. That is, extended video streams compression-coded by applying compression-coding methods other than AVC may be similarly contained in the transport stream. For instance, the extended video stream may be compression-coded under H.265, which is a compression-coding technology of the next generation.

In the description provided in the above, information indicating video streams composing 3D video is contained in the 3D_combi_info_descriptor. However, the present embodiment is not limited to this, and stream descriptors corresponding to the L video stream and the R video stream may each contain a PID of a video stream of the opposite perspective that is used in combination therewith in 3D playback.

In addition, when closed-caption subtitle data are included in both the base stream and the extended stream, an identifier indicating which closed-caption subtitle data are to be used in each of 2D and 3D playback may be contained in the PMT of the transport stream.

Playback devices are able to specify closed-caption data to be used in each of 2D and 3D playback by referring to this identifier.

In the description provided in the above, description has been provided that the 3D_system_info_descriptor, the 3D_service_info_descriptor, and the 3D_combi_info_descriptor are commonly contained in the PMT packet. However, the containment location for such descriptors is not limited to this. The descriptors may be contained in any area of the transport stream. For instance, the descriptors may be contained in the supplementary data or the like of each of the video streams, apart from the PMT packet.

In the description provided in the above, PIDs indicating video streams are set to the 3D_combi_info_descriptor so as to enable the specification of video streams to be used in 2D and 3D playback. However, the present embodiment is not limited to this. The 3D_combi_info_descriptor need only include information specifying each of the video streams multiplexed.

For instance, each of the multiplexed video streams may be specified by using a hierarchy descriptor defined under the MPEG 2 system standard. More specifically, by defining a new hierarchy_type for the hierarchy_descriptor, and by specifying video streams by containing the hierarchy_layer_index in the 3D_combi_info_descriptor, the video streams used as a pair in 3D playback and the video stream to be used in 2D playback may be specified.

Subsequently, description is provided on a data creation device for creating transport streams pertaining to the present embodiment.

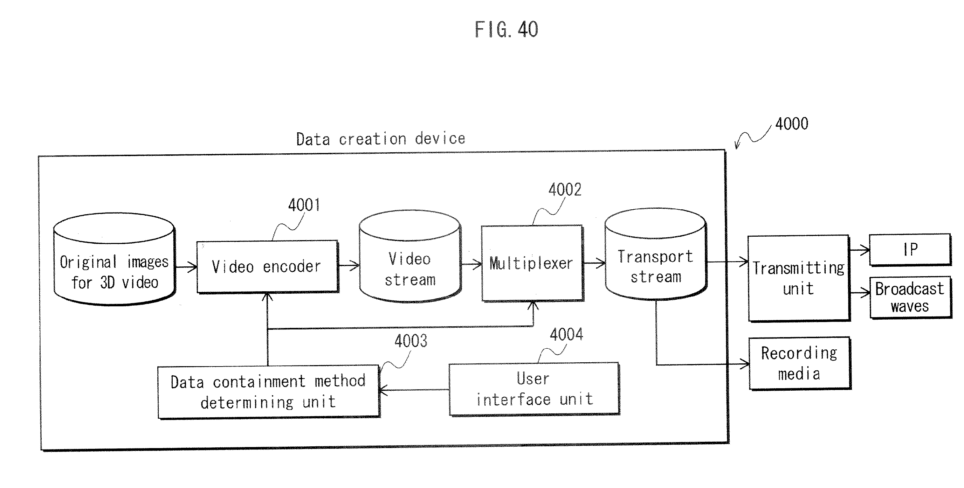

Fig. 40 illustrates an internal structure of a data creation device 4000. As illustrated in Fig. 40, the data creation device 4000 includes: a video encoder 4001; a multiplexer 4002; a data containment method determining unit 4003; and a user interface unit 4004.

The user interface unit 4004 enables a creator of data to perform input of data via a keyboard, a mouse, and other controllers and the like. More specifically, the creator of data specifies the type of video streams to be contained in a transport stream to be created and the compression-coding method to be applied by using the user interface unit 4004.

The data containment method determining unit 4003 determines the combination of video streams to be contained in the transport stream and the compression-coding method to be applied for the compression-coding of video streams according to the specifications made by the user with respect to the user interface unit 4004.

The video encoder 4001 creates video streams as specified by the data containment method determining unit 4003 by compression-coding original 3D images in accordance with compression-coding methods such as MPEG 2, AVC, MVC, and H.265.

The multiplexer 4002 creates each of the descriptors, namely the 3D_system_info_descriptor, the 3D_service_info_descriptor, and the 3D_combi_info_descriptor, which are in accordance with the combination of the video streams contained in the transport stream to be created by following instructions provided by the data containment method determining unit 4003. Further, the multiplexer 4002 creates a transport stream by multiplexing such descriptors and streams output from the video encoder 4001, which include video streams, audio and subtitle streams and the like, according to instructions provided from the data containment method determining unit 4003.

The transport stream so created is recorded onto external recording media. In addition, data of the transport stream so created is transmitted via broadcasts or a network by an external transmitting unit.
This concludes the description on the structure of the data creation device 4000. Subsequently, description is provided on the operations of the data creation device 4000.

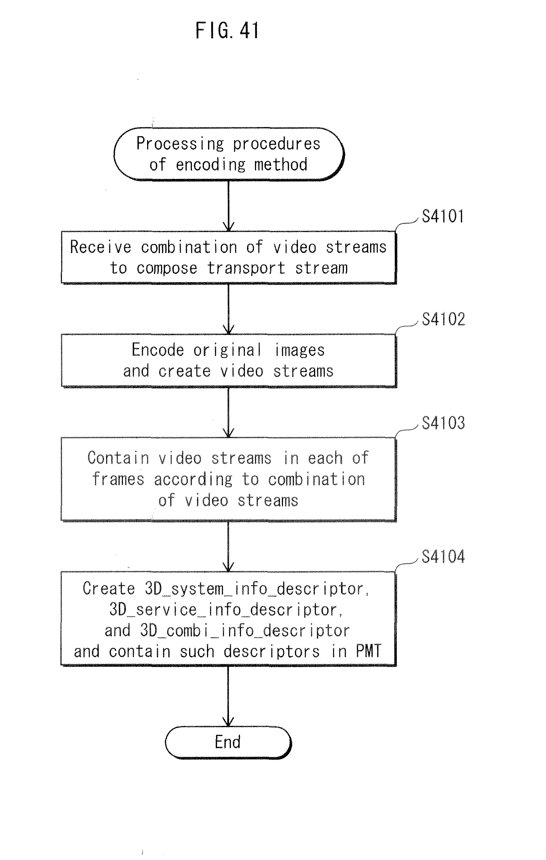

Fig. 41 is a flowchart illustrating a flow of processing of encoding performed by the data creation device 4000.

First, the data containment method determining unit 4003 determines a combination of video streams which are to compose the transport stream (Step S4101). In specific, the data containment method determining unit 4003 determines the combination of video streams to be contained in the transport stream, and the compression-coding method to be applied to the video streams. Here, the combination of video streams contained in the transport stream may be one of combinations such as illustrated in Figs. 25, 26, 31, 34, and 37, but at the same time, the transport stream may also include only a Side-by-Side video stream (2D/SBS) or other combinations of video streams.

Subsequently, the video encoder 4001 performs compression-coding of 3D original images and thereby creates video streams (Step S4102). Here, the video encoder 4001 determines the compression-coding method to be applied in the compression-coding of 3D original images according to the specifications made by the data containment method determining unit 4003 of the combination of video streams to be contained in the transport stream and the compression-coding method to be applied to the video streams to be contained in the transport stream.

Following this, the multiplexer 4002 contains the video streams in frames according to the combination of video streams contained in the transport stream as specified by the data containment method determining unit 4003 (Step S4103).

Subsequently, the multiplexer 4002 creates each of the descriptors, namely the 3D_system_info_descriptor, the 3D_service_info_descriptor, and the 3D_combi_info_descriptor, and contains such descriptors in the PMT of the transport stream (Step S4104). Here, the creation of the descriptors by the multiplexer 4002 is conducted in accordance with the combination of video streams contained in the transport stream specified by the data containment method determining unit 4003.

This concludes the description on the operations of the data creation device 4000.

In the following, description is provided on a 3D digital television, which is a playback device for performing playback of the transport stream pertaining to the present embodiment.

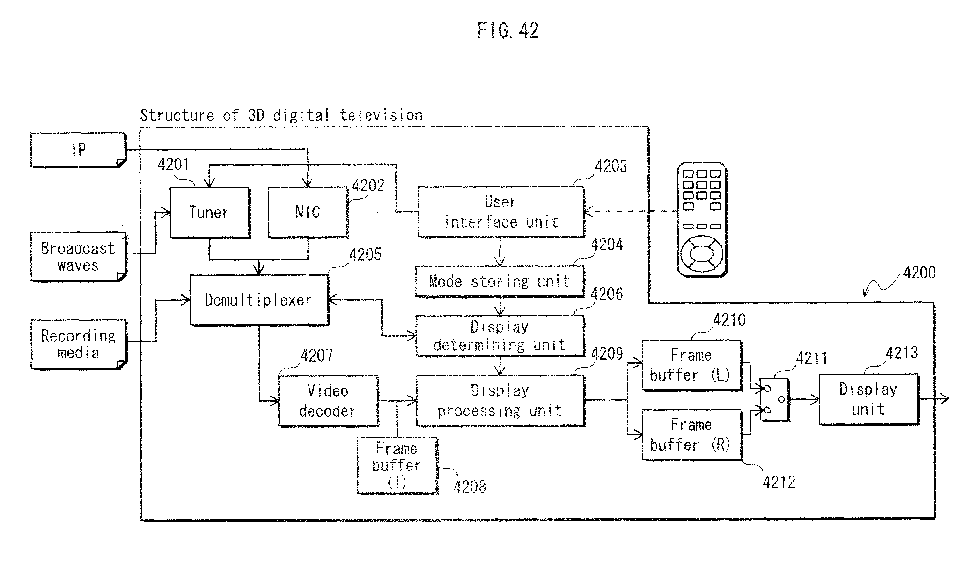

Fig. 42 illustrates an internal structure of a 3D digital television 4200 pertaining to the present embodiment. As illustrated in Fig. 42, the 3D digital television 4200 includes: a tuner 4201; an NIC 4202; a user interface unit 4203; a mode storing unit 4204; a demultiplexer 4205; a display determining unit 4206; a video decoder 4207; a frame buffer (1) 4208; a display processing unit 4209; a frame buffer (L) 4210; a frame buffer (R) 4212; a switch 4211; and a display unit 4213.

The tuner 4201 receives transport streams in digital broadcasts and demodulates the signals received therefrom.

The network interface card (NIC) 4202 is connected to an IP network and receives transport streams from external sources.

The user interface unit 4203 receives user operations such as channel selection and selection between the 2D and 3D modes from a user.

The mode storing unit 4204 stores a flag indicating whether the current display mode is the 2D mode or the 3D mode.

The demultiplexer 4205 demultiplexes a transport stream received into a video stream and other streams, such as an audio stream and a graphics stream, and outputs the video stream to the video decoder 4207.

Further, the demultiplexer 4205 extracts system packets, such as the PSI, from the received transport streams, obtains, from the PMT packet of the transport stream, each of the descriptors, namely the 3D_system_info_descriptor, the 3D_service_info_descriptor, and the 3D_combi_info_descriptor, and notifies the display determining unit 4206 of such information.

Further, in the extracting of video streams, the demultiplexer 4205 receives a specification of PIDs of TS packets to be extracted in the current display mode from the display determining unit 4206. The demultiplexer 4205 obtains video streams by separating TS packets of the specified PIDs.

Note that the demultiplexer 4205 is also capable of reading out transport streams from recording media, in addition to reading out transport streams from the tuner 4201 and the NIC 4202.

The display determining unit 4206 specifies a combination of video streams contained in the transport stream by referring to each of the descriptors, namely the 3D_system_info_descriptor, the 3D_service_info_descriptor, and the 3D_combi_info_descriptor notified from the demultiplexer 4205. Further, the display determining unit 4206 notifies the demultiplexer 4205 of the PIDs of the TS packets to be extracted under the current display mode indicated by the mode storing unit 4204.

In addition to this, the display determining unit 4206, when the 3D playback method is the frame compatible format, also notifies the display processing unit 4209 of such information as (i) which of the left-view video and the right-view video is to be used for 2D playback and (ii) whether or not the video stream is a Side-by-Side video stream or not. The display determining unit 4206 refers to the 2D_view_flag identifier of the 3D_system_info_descriptor and the frame_packing_arrangement_type identifier of the 3D_service_info_descriptor in making such a notification.

The video decoder 4207 receives the video streams from the demultiplexer 4207 and decodes the video streams so received. The video decoder 4207 writes decoded frames to the frame buffer (1) 4208.

The frame buffer (1) 4208 has an area for containing the frames decoded by the video decoder 4207.

The display processing unit 4209, when the video stream contained in the frame buffer (1) 4208 is a Side-by-Side video stream, performs cropping and scaling respectively according to cropping information and scaling information. The display processing unit 4209 respectively contains the left-view frames and right-view frames obtained as a result of the cropping to the frame buffer (L) and the frame buffer (R).

In addition, when the video streams contained in the frame buffer (1) 4208 are a left-view video stream and a right-view video stream, the display processing unit 4209 allocates such video streams to the corresponding one of the frame buffer (L) 4210 and the frame buffer (R) 4212.

The frame buffer (L) 4210 and the frame buffer (R) 4212 each have an area for storing the frames output from the display processing unit 4209.

The switch 4211 selects frame images written to the frame buffer (L) 1610 and the frame buffer (R) 1611 and transfers the selected images to the display unit 4213.

The display unit 4213 displays the frames transferred thereto by the switch 4211. Further, the display unit 4213 communicates with the 3D glasses and controls the liquid crystal shutters thereof such that the left side is open when a left-view image is displayed and the right side is open when a right-view image is displayed. Note that the display unit 4213 does not perform the control of the 3D glasses when displaying 2D video.

This concludes the description on the structure of the 3D digital television 4200.

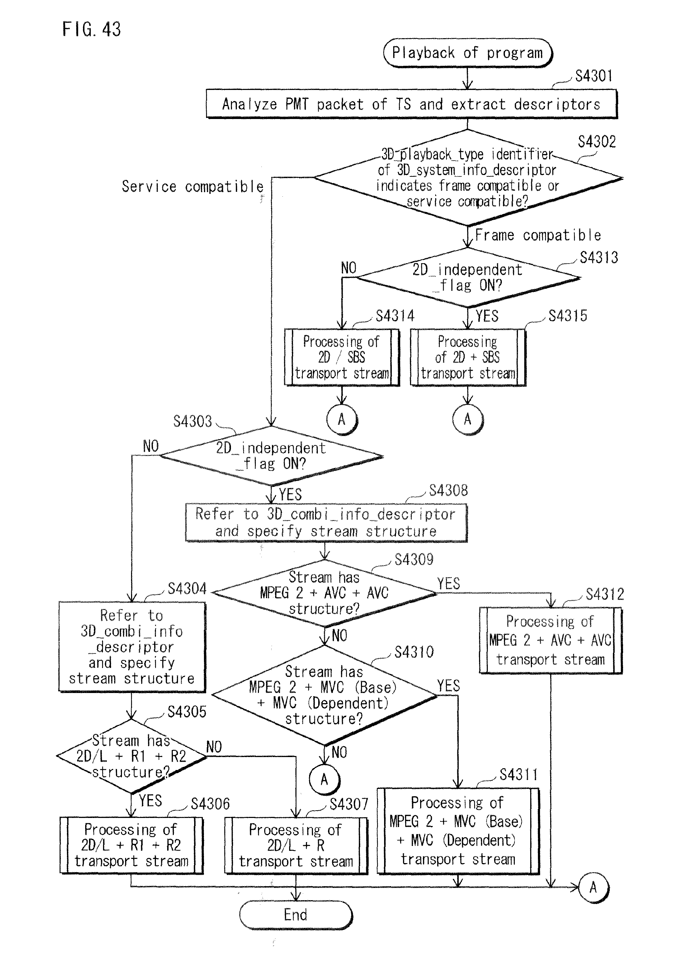

Subsequently, description is provided on the operations of the 3D digital television 4200. Fig. 43 is a flowchart illustrating one example of a flow of processing of playback of a program by the 3D digital television 4200.

As illustrated in Fig. 43, the demultiplexer 4205 analyzes the PMT packet of the transport stream and extracts the above-described descriptors therefrom (Step S4301).

The display determining unit 4206 refers to the 3D_playback_type identifier of the 3D_system_info_descriptor extracted by the demultiplexer 4205 and determines the playback method of the transport stream received (Step S4302).

When the playback method to be applied to the transport stream is the service compatible method (Step S4302), the display determining unit 4206 refers to the 2D_independent_flag identifier of the 3D_system_info_descriptor, and thereby determines whether or not one video stream, among the video streams contained in the transport stream, is commonly used for both 2D and 3D playback (Step S4303).

When the value "0" is set to the 2D_independent_flag (Step S4303: NO), the display determining unit 4206 refers to the 3D_combi_info_descriptor and thereby specifies a combination of video streams contained in the transport stream (Step S4304).

When the transport stream has a 2D/L + R1 + R2 structure (Step S4305: YES), the 3D digital television 4200 performs processing of the 2D/L + R1 + R2 transport stream as described in the following (Step S4306).

When the transport stream has a 2D/L + R structure (Step S4305: NO), the 3D digital television 4200 performs processing of the 2D/L + R transport stream as described in the following (Step S4307).

When the value "1" is set to the 2D_independent_flag (Step S4303: YES), the display determining unit 4206 refers to the 3D_combi_info_descriptor and thereby specifies a combination of video streams contained in the transport stream (Step S4308).

When the transport stream has an MPEG 2 + MVC (Base) + MVC (Dependent) structure (Step S4310: YES), the 3D digital television 4200 performs processing of the MPEG 2 + MVC (Base) + MVC (Dependent) transport stream as described in the following (Step S4311).

When the transport stream has an MPEG 2 + AVC + AVC structure (Step S4309: YES), the 3D digital television 4200 performs processing of the MPEG 2 + AVC + AVC transport stream as described in the following (Step S4312).

When the playback method to be applied to the transport stream is the frame compatible method (Step S4302), the display determining unit 4206 refers to the 2D_independent_flag identifier of the 3D_system_info_descriptor, and thereby determines whether or not one video stream, among the video streams contained in the transport stream, is commonly used for both 2D and 3D playback (Step S4313).

When the value "0" is set to the 2D_independent_flag (Step S4313: NO), the 3D digital television 4200 performs processing of the 2D/SBS transport stream as described in the following (Step S4314).

When the value "1" is set to the 2D_independent_flag (Step S4313: YES), the 3D digital television 4200 performs processing of the 2D + SBS transport stream as described in the following (Step S4315).

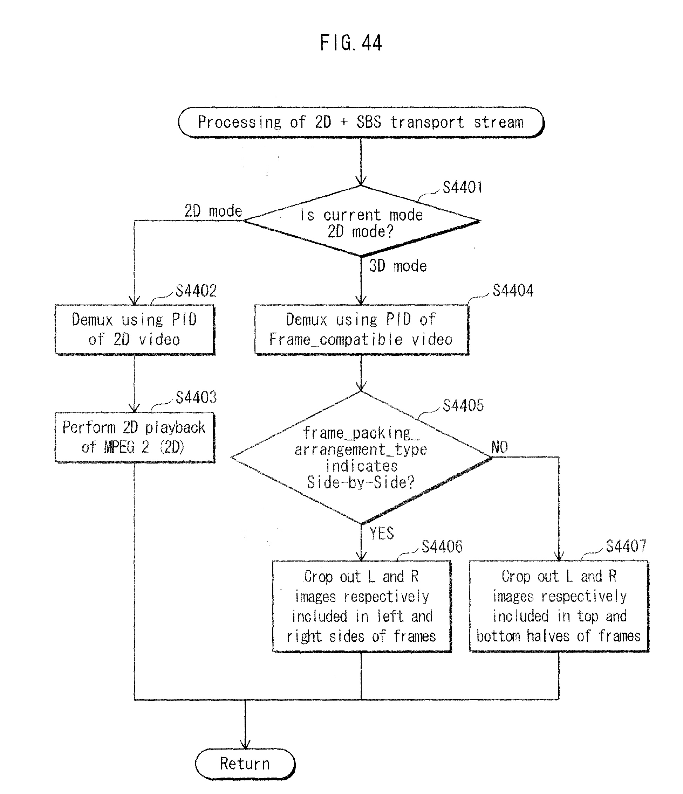

Subsequently, detailed explanation is provided of the processing performed in Step S4315 with respect to the 2D + SBS transport stream. Fig. 44 is a flowchart illustrating a flow of the processing performed with respect to the 2D + SBS transport stream.

As illustrated in Fig. 44, the display determining unit 4206 refers to the flag stored in the mode storing unit 4204 to judge whether the current mode is the 2D mode or the 3D mode (Step S4401).

When the current mode is the 2D mode (Step S4401), the demultiplexer 4205 separates TS packets indicated by the 2D_view_PID/tag of the 3D_combi_info_descriptor, and thereby extracts a 2D video stream (Step S4402).

Further, the 3D digital television 4200 performs 2D playback by decoding the MPEG 2 (2D) video stream so extracted with use of the video decoder 4207 and by outputting video signals to the display unit 4213 (Step S4403).

When the current mode is the 3D mode (Step S4401), the demultiplexer 4205 separates TS packets indicated by the frame_compatible_3D_PID/tag of the 3D_combi_info_descriptor, and thereby extracts a video stream (Step S4404).

The display determining unit 4206 refers to the frame_packing_arrangement_type identifier of the 3D_service_info_descriptor and judges whether or not the video stream is contained in the Side-by-Side format (Step S4405).

When the frame_packing_arrangement_type identifier indicates that the video stream is a Side-by-Side video stream (Step S4405: YES), the display processing unit 4209 performs 3D playback by cropping out the left-view images and the right-view images respectively included in the left and right sides of the frames in the Side-by-Side format (Step S4406).

When the frame_packing_arrangement_type identifier indicates that the video stream is not a Side-by-Side video stream (Step S4305: NO) and hence, when it is judged that the video stream is a Top-and-Bottom video stream, the display processing unit 4209 performs 3D playback by cropping out the left-view images and the right-view images respectively included in the top and bottom halves of the frames in the Top-and-Bottom format (Step S4407).

This concludes the detailed explanation of the processing performed in Step S4315 with respect to the 2D + SBS transport stream. Next, detailed explanation is provided of the processing performed in Step S4314 with respect to the 2D/SBS transport stream.

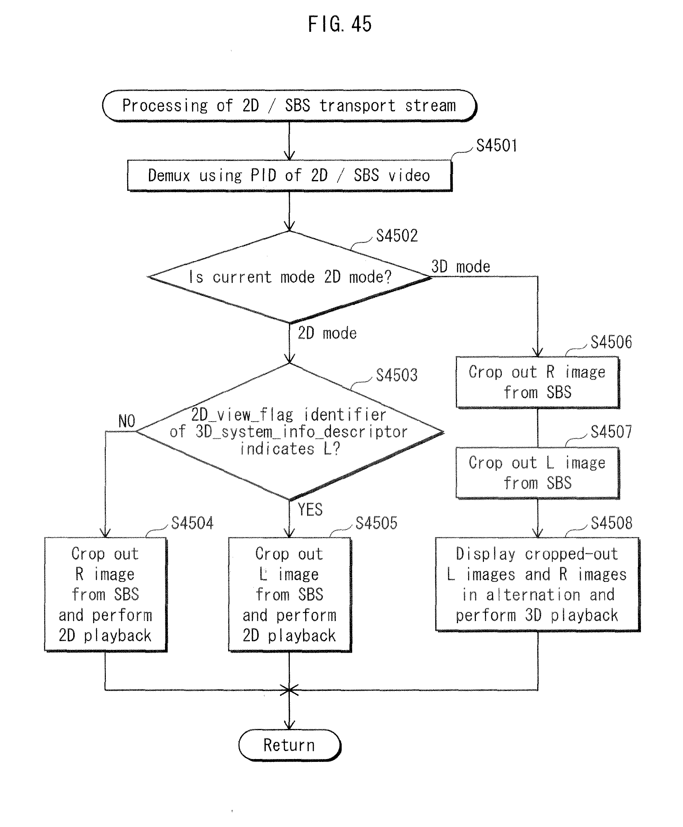

Fig. 45 is a flowchart illustrating a flow of the processing performed with respect to the 2D/SBS transport stream. As illustrated in Fig. 45, when the current mode is the 3D mode (Step S4401), the demultiplexer 4205 separates TS packets indicated by the frame_compatible_3D_PID/tag of the 3D_combi_info_descriptor, and thereby extracts a 2D/SBS video stream (Step S4501).

As illustrated in Fig. 44, the display determining unit 4206 refers to the flag stored in the mode storing unit 4204 to judge whether the current mode is the 2D mode or the 3D mode (Step S4502).

When the current mode is the 2D mode (Step S4502), the display determining unit 4206 refers to the 2D_view_flag identifier of the 3D_system_info_descriptor and judges whether to use the left sides or the right sides of the frames of the Side-by-Side format for 2D playback.

When the 2D_view_flag identifier indicates the left-view image (Step S4503: YES), the display processing unit 4209 crops out the area of the left-view image from the frames of the Side-by-Side format and thereby performs 2D playback (Step S4505).

When the 2D_view_flag identifier indicates the right-view image (Step S4503: NO), the display processing unit 4209 crops out the area of the right-view image from the frames of the Side-by-Side format and thereby performs 2D playback (Step S4504).

When the current mode is the 3D mode (Step S4502), the display processing unit 4209 crops out the area of the right-view image from the frames of the Side-by-Side format (Step S4506) and further crops out the area of the left-view image from the frames of the Side-by-Side format (Step S4507).

The 3D digital television 4200 outputs the left-view images and the right-view images having been cropped out as described in the above to the display unit 4213 in alternation and thereby performs 3D playback (Step S4508).

This concludes the detailed explanation of the processing performed in Step S4314 with respect to the 2D/SBS transport stream. In the following, detailed explanation is provided of the processing performed in Step S4307 with respect to the 2D/L + R transport stream.

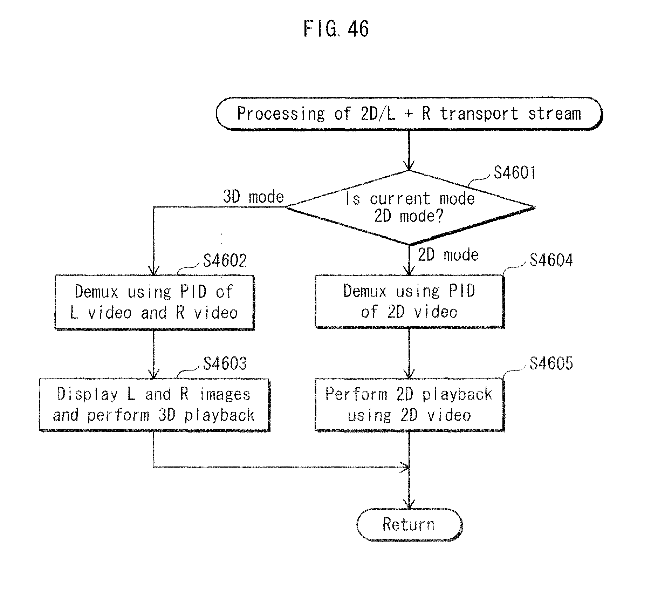

Fig. 46 is a flowchart illustrating a flow of the processing performed with respect to the 2D/L + R transport stream. As illustrated in Fig. 46, the display determining unit 4206 refers to the flag stored in the mode storing unit 4204 to judge whether the current mode is the 2D mode or the 3D mode (Step S4601).

When the current mode is the 3D mode (Step S4601), the demultiplexer 4205 separates TS packets indicated by the Left_view_PID/tag and the TS packets indicated by the Right_view_PID/tag of the 3D_combi_info_descriptor, and thereby extracts a 2D/L video stream and an R video stream (Step S4602).

Further, the 3D digital television 4200 performs 3D playback by decoding the 2D/L video stream and the R video stream so extracted with use of the video decoder 4207 and by outputting video signals to the display unit 4213 (Step S4603).

When the current mode is the 2D mode (Step S4601), the demultiplexer 4205 separates TS packets indicated by the 2D_view_PID/tag of the 3D_combi_info_descriptor, and thereby extracts a 2D/L video stream (Step S4604).

Further, the 3D digital television 4200 performs 2D playback by decoding the 2D/L video stream so extracted with use of the video decoder 4207 and by outputting video signals to the display unit 4213 (Step S4605).

This concludes the detailed explanation of the processing performed in Step S4307 with respect to the 2D/L + R transport stream. In the following, detailed explanation is provided of the processing performed in Step S4306 with respect to the 2D/L + R1 + R2 transport stream. Here, note that the same reference signs as Fig. 46 are provided to processing similar to the processing performed with respect to the 2D/L + R transport stream.

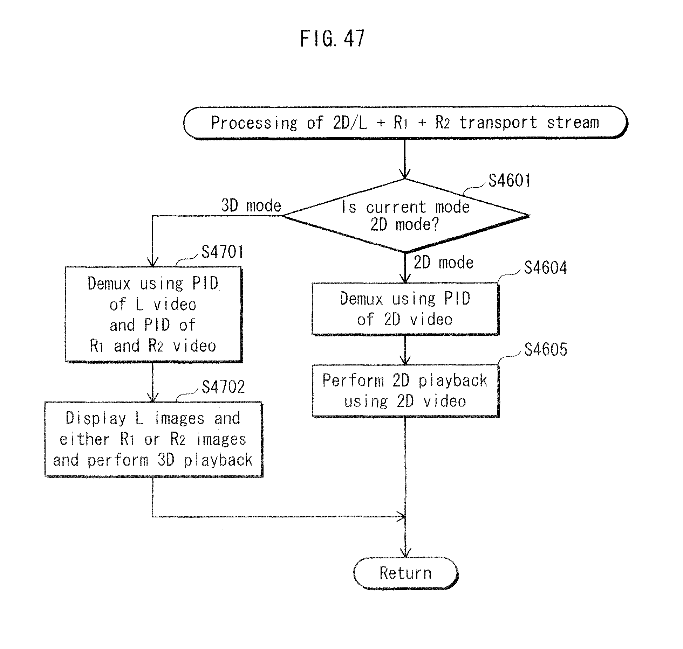

Fig. 47 is a flowchart illustrating a flow of the processing performed with respect to the 2D/L + R1 + R2 transport stream. As illustrated in Fig. 47, the display determining unit 4206 refers to the flag stored in the mode storing unit 4204 to judge whether the current mode is the 2D mode or the 3D mode (Step S4601).

When the current mode is the 3D mode (Step S4601), the demultiplexer 4205 separates TS packets indicated by the Left_view_PID/tag and the TS packets indicated by the Right_view_PID/tag of the 3D_combi_info_descriptor, and thereby extracts a 2D/L video stream, an R1 video stream, and an R2 video stream (Step S4701).

Further, the 3D digital television 4200 performs 3D playback by decoding the 2D/L video stream, the R1 video stream, and the R2 video stream so extracted with use of the video decoder 4207 and by outputting video signals to the display unit 4213 (Step S4702).

The processing performed in Steps 4604 and 4605 is similar to the processing as illustrated in Fig. 46 performed with respect to the 2D/L + R transport stream, and hence, explanation thereof is omitted.

This concludes the detailed explanation of the processing performed in Step S4306 with respect to the 2D/L + R1 + R2 transport stream. In the following, detailed explanation is provided of the processing performed in Step S4312 with respect to the MPEG 2 + AVC + AVC transport stream.

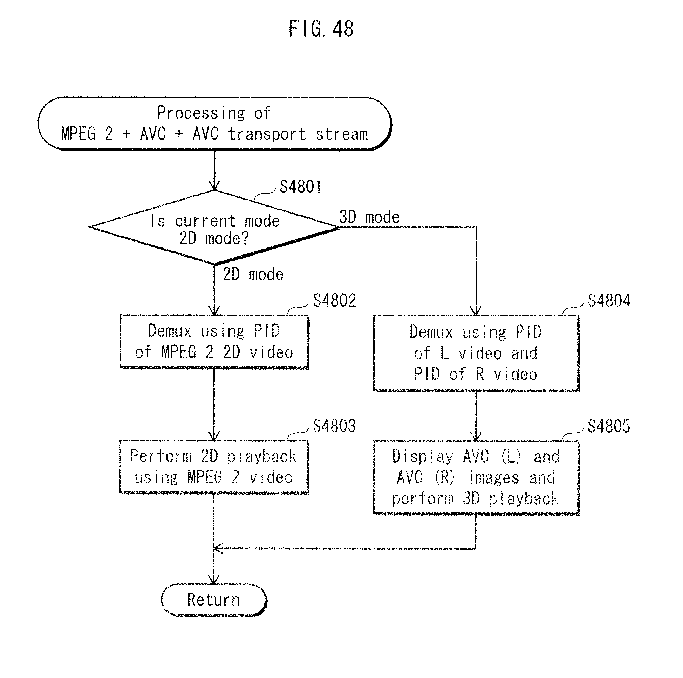

Fig. 48 is a flowchart illustrating a flow of processing performed with respect to an MPEG 2 + AVC + AVC transport stream. As illustrated in Fig. 48, the display determining unit 4206 refers to the flag stored in the mode storing unit 4204 to judge whether the current mode is the 2D mode or the 3D mode (Step S4801).

When the current mode is the 2D mode, the demultiplexer 4205 separates TS packets indicated by the 2D_view_PID/tag of the 3D_combi_info_descriptor, and thereby extracts a MPEG 2 (2D) video stream (Step S4802).

Further, the 3D digital television 4200 performs 2D playback by decoding the MPEG 2 (2D) video stream so extracted with use of the video decoder 4207 and by outputting video signals to the display unit 4213 (Step S4803).

When the current mode is the 3D mode, the demultiplexer 4205 separates TS packets indicated by the Left_view_PID/tag and the TS packets indicated by the Right_view_PID/tag of the 3D_combi_info_descriptor, and thereby extracts a left-view video stream and a right-view video stream (Step S4804).

Further, the 3D digital television 4200 performs 3D playback by decoding the right-view video stream and the left-view video stream so extracted with use of the video decoder 4207 and by outputting video signals to the display unit 4213 (Step S4805).

This concludes the detailed explanation of the processing performed in Step S4312 with respect to the MPEG 2 + AVC + AVC transport stream. In the following, detailed explanation is provided of the processing performed in Step S4311 with respect to the MPEG 2 + MVC (Base) + MVC (Dependent) transport stream.

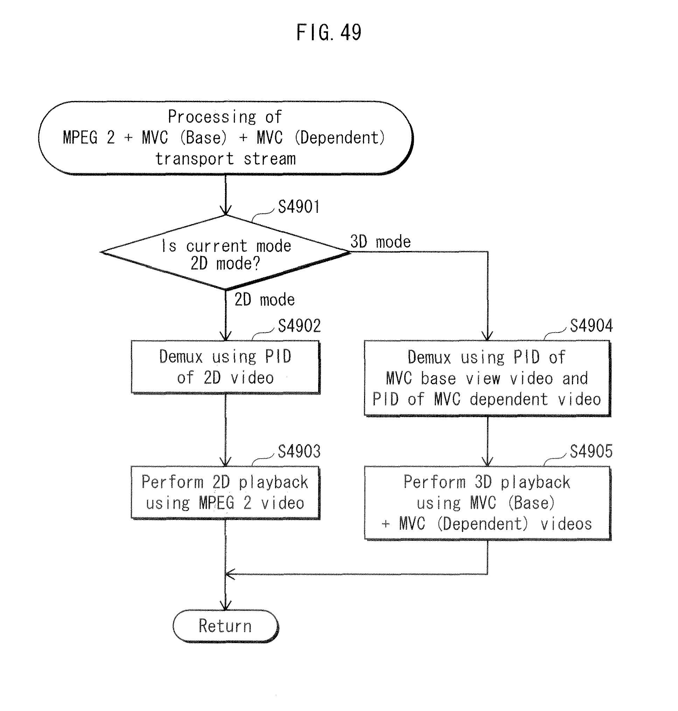

Fig. 49 is a flowchart illustrating a flow of processing of an MPEG 2 + MVC (Base) + MVC (Dependent) transport stream. As illustrated in Fig. 49, the display determining unit 4206 refers to the flag stored in the mode storing unit 4204 to judge whether the current mode is the 2D mode or the 3D mode (Step S4901).

When the current mode is the 2D mode, the demultiplexer 4205 separates TS packets indicated by the 2D_view_PID/tag of the 3D_combi_info_descriptor, and thereby extracts an MPEG 2 (2D) video stream (Step S4902).

Further, the 3D digital television 4200 performs 2D playback by decoding the MPEG 2 (2D) video stream so extracted with use of the video decoder 4207 and by outputting video signals to the display unit 4213 (Step S4903).

When the current mode is the 3D mode, the demultiplexer 4205 separates TS packets indicated by the MVC_base_view_PID/tag and the TS packets indicated by the MVC_dept_view_PID/tag of the 3D_combi_info_descriptor, and thereby extracts a base view stream and a dependent view stream (Step S4904).

Further, the 3D digital television 4200 performs 3D playback by decoding the base view stream and the dependent view stream so extracted with use of the video decoder 4207 and by outputting video signals to the display unit 4213 (Step S4905).

As description has been provided in the above, according to the present embodiment, specification of a combination of video streams composing a transport stream can be made by referring to a descriptor multiplexed to the transport stream. Hence, 2D/3D compatible playback and seamless transition between 2D and 3D playback are realized.

### (Supplement)

Although description has been provided in the above on the present invention with reference to embodiments thereof, the present invention is not limited to such embodiments. Various modifications as described in the following are construed as being included in the scope of the present invention.

(a) The present invention may be an application execution method which is disclosed through the processing procedures described in each of the embodiments. In addition, the present invention may be a computer program which includes a program code for running a computer according to the above-described processing procedures.

(b) The present invention may be typically implemented as an LSI for controlling the playback device as described in each of the embodiments. An LSI is realized through the integration of function blocks, and each of such function blocks may be separately integrated into a single chip, or the function blocks may be integrated into a single chip including a part or all of the circuits.

Although description has been made on the basis of an LSI in the above, the name of the integrated circuit may differ according to the degree of integration of the chips. Other integrated circuits include an IC, a system LSI, a super LSI, and an ultra LSI.

Further, the method applied for forming integrated circuits is not limited to the LSI, and the present invention may be realized on a dedicated circuit or a general purpose processor. For example, the present invention may be realized on a FPGA (Field Programmable Gate Array) being an LSI which can be programmed after manufacturing, or a reconfigurable processor being a LSI, reconfiguration of which could be made to the connection of internal circuit cells and settings.

Further in addition, if a new technology of circuit integration replacing that of the LSI emerges as a result of the progress made in the field of semiconductor technology or another technology deriving therefrom, the integration of function blocks may be performed applying such technology. At this point, there is a possibility of biotechnology being applied to induce the future development of circuit integration technology.

### [Industrial Applicability]

According to the encoding method pertaining to the present invention, a descriptor specifying a video stream composing 2D video and video streams composing 3D video is contained in a transport stream. Since specification of a combination of video streams composing a transport stream can be made by referring to the descriptor multiplexed to the transport stream, the present invention has the advantageous effect of realizing 2D/3D compatible playback and seamless transition between 2D and 3D playback.

### [Reference Signs List]

- 100: playback device
- 200: 3D glasses
- 300: 2D digital television
- 501: video frame sequence
- 502: PES packets corresponding to video
- 503: TS packets corresponding to video
- 504: audio frame sequence
- 505: PES packets corresponding to audio
- 506: TS packets corresponding to audio
- 507: subtitle stream
- 508: PES packets corresponding to subtitle stream
- 509: TS packets corresponding to subtitle stream
- 513: transport stream
- 1501: tuner of playback device
- 1502: NIC of playback device
- 1503: demultiplexer of playback device
- 1504: video decoder of playback device
- 1505: display judging unit of playback device
- 1506: display processing unit of playback device
- 1507: display unit of playback device
- 1508: frame buffer (1) of playback device
- 1510: frame buffer (L) of playback device
- 1511: frame buffer (R) of playback device
- 1512: switch of playback device
- 2301: video encoder
- 2302: multiplexer
- 2303: data containment method determining unit
- 4000: data creation device
- 4001: video encoder
- 4002: multiplexer
- 4003: data containment method determining unit
- 4004: user interface unit 4004
- 4200: 3D digital television
- 4201: tuner
- 4202: NIC
- 4203: user interface unit
- 4204: mode storing unit
- 4205: demultiplexer
- 4206: display judging unit
- 4207: video decoder
- 4208: frame buffer (1)
- 4209: display processing unit 4209
- 4210: frame buffer (L)
- 4211: switch
- 4212: frame buffer (R)
- 4213: display unit

## Claims

1. An encoding method comprising:
an encoding step of compression-coding images and thereby generating a plurality of video streams;
a multiplexing step of multiplexing the plurality of video streams and thereby obtaining a transport stream, wherein
the plurality of video streams include a 2D video stream that constitutes 2D video for 2D playback,
variations of composition of 3D video for 3D playback include (i) a combination of the 2D video stream and another video stream among the plurality of video streams and (ii) a combination of two or more video streams, among the plurality of video streams, other than the 2D video stream, and
the transport stream includes 3D video specification information specifying video streams constituting the 3D video.

2. The encoding method of Claim 1 further comprising:
a creating step of creating a contents table, wherein
in the multiplexing step, the contents table is multiplexed with the plurality of video streams, the contents table including one or more table descriptors and stream information pieces, the stream information pieces respectively corresponding to the plurality of video streams and each including a stream type, a stream identifier, and a stream descriptor, and
the 3D video specification information is contained in (i) the one or more table descriptors or (ii) the stream descriptor.

3. The encoding method of Claim 1, wherein
the 3D video specification information includes 2D video specification information specifying the 2D video stream.

4. The encoding method of Claim 3, wherein
the 3D video specification information specifies the video streams constituting the 3D video by including indication of stream identifiers each corresponding to a left-view video stream constituting left-view video of the 3D video and a right-view video stream constituting right-view video of the 3D video, and
the 2D video specification information specifies the 2D video stream by including indication of a stream identifier corresponding to the 2D video stream.

5. The encoding method of Claim 2, wherein
the contents table includes a 2D/3D common-use flag, and
the 2D/3D common-use flag indicates whether or not the 2D video stream is included in the video streams constituting the 3D video.

6. The encoding method of Claim 2, wherein
when the 3D video specification information specifies a single video stream that constitutes the 3D video,
the single video stream constitutes L/R packed video, the L/R packed video being video where each frame thereof contains a left-view image and a right-view image, and
the contents table includes L/R packing information, the L/R packing information indicating a packing method according to which the left-view image and the right-view image are contained in each frame constituting the L/R packed video.

7. The encoding method of Claim 2, wherein
the contents table includes camera assignment information indicating a camera channel configuration of the 3D video, the camera channel configuration being one of (i) C channel, (ii) L channel + R channel, (iii) C channel + L channel + R channel, and (iv) C channel + R1 channel + R2 channel, and
the camera assignment information indicates the camera channel configuration according to which the video streams constituting the 3D video specified by the 3D video specification information have been produced.

8. The encoding method of Claim 2, wherein
the 2D video stream and the video streams constituting the 3D video each contain text display control information, and
in the creating step, the contents table is provided with indication of information indicating whether text display in each of a 2D playback mode and a 3D playback mode is to be executed using (i) the text display control information contained in the 2D video stream or (ii) the text display control information contained in the video streams constituting the 3D video.

9. The encoding method of Claim 2, wherein
the stream descriptor contains a flag indicating whether the corresponding video stream is left-view video of the 3D video or right-view video of the 3D video.

10. The encoding method of Claim 2, wherein
the 3D video specification information is written in the stream descriptor.

11. The encoding method of Claim 2, wherein
in the creating step, each of the stream information pieces included in the contents table is provided with indication of a stream identifier of each of one or more video streams constituting the 3D video in combination with the corresponding video stream, thereby indicating two or more video streams constituting the 3D video.

12. The encoding method of Claim 1, wherein
in the creating step, a descriptor is created and inserted into each of the plurality of video streams.

13. A display apparatus comprising:
a reception unit that receives input of a transport stream from external sources, the transport stream including a plurality of video streams;
a storage unit that stores one of a 2D mode and a 3D mode as a current mode; and
a playback unit that plays back 2D video by using a 2D video stream included in the transport stream when the current mode is the 2D mode, wherein
the transport stream includes 3D video specification information specifying video streams constituting 3D video,
the playback unit plays back the 3D video by using the video streams constituting the 3D video when the current mode is the 3D mode, and
variations of composition of the 3D video include (i) a combination of the 2D video stream and another video stream among the plurality of video streams and (ii) a combination of two or more video streams, among the plurality of video streams, other than the 2D video stream.

14. The display apparatus of Claim 13, wherein the transport stream is obtained by converting the plurality of video streams and a contents table into a transport stream packet sequence, the display apparatus further comprising:
a demultiplexing unit that demultiplexes the transport stream and separates a predetermined transport stream packet from the transport stream, the predetermined transport stream packet being a transport stream packet containing the contents table, wherefrom the display apparatus obtains the 3D video specification information.

15. The display apparatus of Claim 14, wherein
the 3D video specification information includes 2D video specification information specifying the 2D video stream, and
the demultiplexing unit (i) separates the 2D video stream from the transport stream according to the 2D video specification information when the current mode is the 2D mode, and (ii) separates transport stream packets containing the video streams constituting the 3D video from the transport stream according to the 3D video specification information when the current mode is the 3D mode.

16. The display apparatus of Claim 15, wherein
the 3D video specification information specifies the video streams constituting the 3D video by including indication of stream identifiers each corresponding to a left-view video stream constituting left-view video of the 3D video and a right-view video stream constituting right-view video of the 3D video, and
the 2D video specification information specifies the 2D video stream by including description of a stream identifier corresponding to the 2D video stream.

17. The display apparatus according to Claim 16, wherein
the transport stream includes a 2D/3D common-use flag indicating whether or not the 2D video stream is included in the video streams constituting the 3D video,
the demultiplexing unit, when the 2D video stream is not included in the video streams constituting the 3D video, performs the separating with respect to different video streams in each of the 2D mode and the 3D mode, and
when a single video stream constitutes the 3D video, the playback unit cuts out a left view image and right-view image from each of frames of the single video stream and supplies the left-view images and the right-view images for display, thereby performing playback of the 3D video, and
when two or more video streams constitute the 3D video, the playback unit decodes two or more video streams separated by the demultiplexing unit to obtain left-view images and right-view images and supplies the left-view images and the right-view images for display, thereby performing playback of the 3D video.

18. The display apparatus of Claim 17, wherein
when the 3D video specification information specifies a single video stream that constitutes the 3D video,
the single video stream constitutes L/R packed video, the L/R packed video being video where each frame thereof contains a left-view image and a right-view image,
the contents table includes L/R packing information, the L/R packing information indicating a packing method according to which the left-view image and the right-view image are contained in each frame constituting the L/R packed video, and
the playback unit specifies, for each frame constituting the L/R packed video, areas of a frame to be cut out, the areas including an area corresponding to the left-view image and an area corresponding to the right-view image.

19. A decoding method comprising:
a receiving step of receiving input of a transport stream from external sources, the transport stream including a plurality of video streams;
a storing step of storing one of a 2D mode and a 3D mode as a current mode; and
a playback step of playing back 2D video by using a 2D video stream included in the transport stream when the current mode is the 2D mode, wherein
the transport stream includes 3D video specification information specifying video streams constituting 3D video,
the playback unit plays back the 3D video by using the video streams constituting the 3D video when the current mode is the 3D mode, and
variations of composition of the 3D video include (i) a combination of the 2D video stream and another video stream among the plurality of video streams and (ii) a combination of two or more video streams, among the plurality of video streams, other than the 2D video stream.
